# EUROPEAN PATENT APPLICATION

(11) **EP 4 344 312 A1**
(43) Date of publication of application: **27.03.2024**
(21) Application number: 22832183.2
(22) Date of filing: 30.06.2022
(51) Int. Cl.: H04W 52/02

(54) **CELL ACCESS METHOD, COMMUNICATION APPARATUS AND COMPUTER STORAGE MEDIUM**

(30) Priority: 01.07.2021 CN 202110746000
(71) Applicant: Huawei Technologies Co., Ltd., Longgang Shenzhen, Guangdong 518129 (CN)
(72) Inventor: LI, Shengyu, Shenzhen, Guangdong 518129 (CN); GUAN, Lei, Shenzhen, Guangdong 518129 (CN); ZHANG, Di, Shenzhen, Guangdong 518129 (CN)
(74) Representative: Goddar, Heinz J.
(86) International application number: PCT/CN2022/102931
(87) International publication number: WO 2023/274371

(57) **Abstract**

This application provides a cell access method, a communication apparatus, and a computer storage medium. The method includes: A network device sends one or more reference signals to a terminal. The terminal sends corresponding first indication information to the network device based on a first reference signal in the received one or more reference signals, where the first indication information indicates the network device to send a downlink common signal, so that the terminal may access a target cell based on the downlink common signal. In the method, the network device does not need to continuously send the downlink common signal, so that energy consumption of the network device may be reduced.

## Description

This application claims priority to Chinese Patent Application No. 202110746000.6, filed with the China National Intellectual Property Administration on July 1, 2021 and entitled "CELL ACCESS METHOD, COMMUNICATION APPARATUS, AND COMPUTER STORAGE MEDIUM", which is incorporated herein by reference in its entirety.

### TECHNICAL FIELD

This application relates to the field of communication technologies, and in particular, to a cell access method, a communication apparatus, and a computer storage medium.

### BACKGROUND

In a wireless communication system, a downlink common signal may be used by a terminal to perform a procedure such as initial cell access, cell measurement, cell handover, or the like. For example, in a new radio (new radio, NR) system, the downlink common signal includes a primary synchronization signal (primary synchronization signal, PSS), a secondary synchronization signal (secondary synchronization signal, SSS), a physical broadcast channel (physical broadcast channel, PBCH), and the like.

However, even if a base station has no requirement for data transmission, a large quantity of time domain resources are still occupied for transmission of the downlink common signal. Consequently, a transmit link of the base station is prevented from performing a higher proportion of time domain shutdown and sleep, and high energy consumption of the base station is caused.

### SUMMARY

Embodiments of this application provide a cell access method, a communication apparatus, and a computer storage medium, so that energy consumption on a network device side may be reduced.

According to a first aspect, an embodiment of this application provides a cell access method. The method may be performed by a terminal or an apparatus (for example, a chip) used for the terminal.

The method includes: receiving M reference signals, where the M reference signals are from C cells, M and C are positive integers, and M is greater than or equal to C; sending first indication information to a network device based on a first reference signal, where the first indication information indicates the network device to send a downlink common signal in a target cell, the downlink common signal is used by the terminal to access the target cell, the downlink common signal includes system information, and the first reference signal belongs to the M reference signals and is from the target cell.

Optionally, that the terminal receives the M reference signals from one or more network devices may be that the terminal attempts to perform blind detection on the M reference signals, and successfully receives a part of or all of the M reference signals; or the terminal attempts to perform the blind detection on N reference signals, and finally successfully receives the M reference signals, where N≥M.

The reference signal may be a discovery reference signal (discovery reference signal, DRS), and the first indication information may be a wake-up signal (wake-up signal, WUS).

In a possible implementation of the first aspect, the method further includes: determining the first reference signal from the M reference signals, for example, determining the first reference signal based on signal received quality of the M reference signals. It may also be understood as that the terminal determines, based on the signal received quality of the M reference signals, a cell corresponding to a reference signal with best signal received quality as the target cell.

Optionally, if the terminal successfully receives a part of the M reference signals, the target cell corresponds to one of the reference signals successfully received by the terminal.

In a possible implementation of the first aspect, the sending first indication information to a network device includes: sending the first indication information by using a predefined transmit power. Optionally, the predefined transmit power is a predefined absolute value, or the predefined transmit power is a maximum transmit power of the terminal, or the predefined transmit power is a minimum value between a predefined absolute value and a maximum transmit power of the terminal.

According to a second aspect, this application provides a cell access method. The method may be performed by a network device or an apparatus (for example, a chip) used for the network device. The network device may be a base station.

The method includes: sending R reference signals to a terminal through C₁ cells, where R and C₁ are positive integers, and R is greater than or equal to C₁; receiving first indication information from the terminal, where the first indication information corresponds to a first reference signal, the first reference signal is one of the R reference signals and is from a target cell, the first indication information indicates the network device to send a downlink common signal in the target cell, the downlink common signal is used by the terminal to access the target cell, and the downlink common signal includes system information; and sending the downlink common signal to the terminal in the target cell.

In a possible implementation of the first aspect or the second aspect, the system information includes one or more of the following: a master information block, scheduling information of a system information block 1, number information of a time unit in which the downlink common signal is located, or random access channel configuration information. The random access channel configuration information includes a time-frequency resource position and sequence information for sending a random access channel by the terminal. The time unit may be a radio frame, a subframe, a slot, a sub-slot, or a symbol.

In a possible implementation of the first aspect or the second aspect, the first reference signal carries a cell identity, and the cell identity may be a physical cell identity or a local cell identity. A value of the physical cell identity is V_{PCI}. Optionally, a value range of the physical cell identity is 0 to 1007. A value of the local cell identity is an integer greater than or equal to 0 and less than or equal to N-1, where N is a positive integer, and N is less than a maximum value of the physical cell identity.

For example, the value of the local cell identity and a value of the physical cell identity satisfy the following relationship: V=V_{PCI} mod N, where V represents the value of the local cell identity, and V_{PCI} represents the value of the physical cell identity PCI.

In a possible implementation of the first aspect or the second aspect, reference signals of different cells have different frequency domain positions. Therefore, a cell in which the reference signal is located may be implicitly indicated by using the frequency domain position.

The frequency domain position of the reference signal may be determined based on a center frequency or a start frequency of a cell in which the first reference signal is located and a frequency domain offset.

In a possible implementation of the first aspect or the second aspect, the first indication information carries a cell identity of the target cell. Optionally, the first indication information is a sequence corresponding to the cell identity of the target cell.

In a possible implementation of the first aspect or the second aspect, the first reference signal further carries a time domain offset, the time domain offset indicates an offset between a time domain position of the first reference signal and a time domain position of the first indication information, the first reference signal is located in a downlink part of a time division duplex frame structure, and the first indication information is located in an uplink part of the time division duplex frame structure. In the implementation, that the terminal sends first indication information to the network device includes: determining the time domain position of the first indication information based on the time domain position of the first reference signal and the offset carried in the first reference signal, and sending the first indication information at the determined time domain position of the first indication information. Correspondingly, that the network device receives first indication information from the terminal includes: receiving R₁ pieces of indication information at time domain positions of the R₁ pieces of indication information, where distances between the time domain positions of the R₁ pieces of indication information and time domain positions of R₁ reference signals are respectively equal to time domain offsets carried in the R₁ reference signals, the first indication information belongs to the R₁ pieces of indication information, and R₁≤M.

In a possible implementation of the first aspect or the second aspect, there is a predefined time domain offset between a time domain position of the first reference signal and a time domain position of the first indication information, the first reference signal is located in a downlink part of a time division duplex frame structure, and the first indication information is located in an uplink part of the time division duplex frame structure. In the implementation, the sending first indication information to a network device includes: determining the time domain position of the first indication information based on the time domain position of the first reference signal and the predefined offset, and sending the first indication information at the determined time domain position of the first indication information. Correspondingly, that the network device receives first indication information from the terminal includes: receiving R₂ pieces of indication information at time domain positions of the R₂ pieces of indication information, where distances between the time domain positions of the R₂ pieces of indication information and time domain positions of R₂ reference signals each are equal to the predefined time domain offset, the first indication information belongs to the R₂ pieces of indication information, and R₂≤M.

In a possible implementation of the first aspect or the second aspect, a spatial domain parameter used by the terminal to receive the first reference signal is the same as a spatial domain parameter used by the terminal to send the first indication information. For example, the that a spatial domain parameter used by the terminal to receive the first reference signal is the same as a spatial domain parameter to send the first indication information includes any one or more of the following: a multi-port combination matrix used when the reference signal is received is the same as a multi-port precoding matrix used when the indication information is sent; or a multi-antenna receive beam used when the reference signal is received is the same as a multi-antenna transmit beam used when the indication information is sent, that is, signal processing weight vectors on a plurality of antennas are the same; or a multi-antenna spatial filter parameter used when the reference signal is received is the same as a multi-antenna spatial filter parameter used when the indication information is sent. Similarly, a spatial domain parameter used by the network device to receive the first indication information is the same as a spatial domain parameter used by the network device to send the first reference signal.

In a possible implementation of the first aspect or the second aspect, the first reference signal occupies two symbols, and the two symbols are spaced by at least one symbol.

In a possible implementation of the first aspect or the second aspect, two or more reference signals are from one cell and are consecutive in time domain, or two adjacent reference signals in time domain are spaced by at least one symbol.

In a possible implementation of the first aspect or the second aspect, the first reference signal includes paging indication information, the paging indication information indicates whether data of one or more terminals belonging to P terminal groups arrives at the network device, the terminal belongs to one of the P terminal groups, and P is a positive integer.

Optionally, the paging indication information includes P bits indicating the P terminal groups. The i^{th} bit in the P bits indicates whether data of one or more terminals in the i^{th} terminal group arrives at the network device, i is a positive integer, and i≤P.

Optionally, the paging indication information includes Q bits. The Q bits indicate whether data of one or more terminals in one of the P terminal groups arrives at the network device, and Q is a positive integer. Optionally, Q=ceil[log₂(1+P)], where log₂ represents a logarithmic function with base 2, and ceil[x] represents rounding up x.

According to the cell access method provided in the first aspect or the second aspect, a transmission manner of the reference signal and corresponding indication information is designed, so that the network device may transmit only the reference signal but not the downlink common signal when the network device is in a cell idle state. When the terminal needs to access a cell, the terminal sends, to the network device, the indication information corresponding to the reference signal, to indicate the network device to send the downlink common signal in a cell corresponding to the reference signal, so that energy consumption of the network device is reduced when the network device is in the cell idle state.

According to a third aspect, this application provides a cell access method. The method may be performed by a terminal or an apparatus, for example, a chip, used for the terminal.

The method includes: receiving configuration information of N dormant cells from a basic cell, where N is a positive integer; determining a first dormant cell from the N dormant cells; and initiating random access to the first dormant cell, where the dormant cell does not send a downlink common signal when the dormant cell is in a cell idle state.

The cell idle state may mean that there is no terminal in a connected state in a cell. Optionally, the dormant cell also does not send the downlink common signal when the dormant cell is in a state other than the cell idle state.

The basic cell is managed by a first network device, and the first dormant cell is managed by a second network device. The first network device and the second network device may be a same network device, or may be different network devices.

In a possible implementation of the third aspect, the method further includes: receiving a first synchronization signal block from the basic cell; and the initiating random access to the first dormant cell includes: sending, to the second network device, a first random access channel corresponding to the first dormant cell, where the first random access channel has a first association relationship with the first synchronization signal block, and the second network device manages the first dormant cell.

In a possible implementation of the third aspect, the method further includes: receiving a first synchronization signal block of the basic cell; and the initiating random access to the first dormant cell includes: sending first indication information to the second network device through the first dormant cell, where the first indication information indicates the second network device to send a second synchronization signal block to the terminal in the first dormant cell, and the first indication information has a second association relationship with the first synchronization signal block; receiving the second synchronization signal block; and sending, to the second network device, a second random access channel corresponding to the second synchronization signal block. Optionally, the first dormant cell may be determined by the terminal based on signal received quality of the first synchronization signal block.

In a possible implementation of the third aspect, the method further includes: receiving P reference signals from L dormant cells, where the P reference signals are reference signals that have an association relationship with Q physical random access channels, L, P, and Q each are a positive integer, L≤P, and L≤N; and the determining a first dormant cell from the N dormant cells includes: determining the first dormant cell based on signal received quality of the P reference signals.

Optionally, the initiating random access to the first dormant cell includes: sending, to the second network device, a third random access channel corresponding to the first dormant cell, where the third random access channel has a third association relationship with a first reference signal from the first dormant cell.

Optionally, the initiating random access to the first dormant cell includes: sending second indication information to the second network device through the first dormant cell based on a first reference signal, where the second indication information indicates the second network device to send a third synchronization signal block to the terminal in the first dormant cell; receiving the third synchronization signal block; and sending, to the second network device, a fourth random access channel corresponding to the third synchronization signal block, where the second indication information has a fourth association relationship with the first reference signal, and the first reference signal belongs to the P reference signals and is from the first dormant cell.

The L dormant cells belong to the N dormant cells, and are managed by one or more network devices. That is, the one or more network devices may send the P reference signals to the terminal through the L dormant cells.

According to a fourth aspect, this application provides a cell access method. The method may be performed by a network device or an apparatus (for example, a chip) used for the network device. The network device may be a base station.

The method includes: sending configuration information of N dormant cells to a terminal through a basic cell, where N is a positive integer, the configuration information of the N dormant cells is used by the terminal to determine to initiate random access to a first dormant cell, the dormant cell does not send a downlink common signal when the dormant cell is in a cell idle state, and the first dormant cell belongs to the N dormant cells.

In a possible implementation of the fourth aspect, a first network device manages the basic cell and S dormant cells, and S≤N.

In a possible implementation of the fourth aspect, the first dormant cell belongs to the S dormant cells, and the method further includes: The first network device sends a first synchronization signal block to the terminal through the basic cell; and the first network device receives from the terminal, a first random access channel corresponding to the first dormant cell, where the first random access channel has a first association relationship with the first synchronization signal block.

Optionally, that the first network device receives, from the terminal, a first random access channel corresponding to the first dormant cell includes: respectively receiving random access channels in S₁ dormant cells, where the random access channels of the S₁ dormant cells each have a first association relationship with the first synchronization signal block, S₁≤S, and the first dormant cell belongs to the S₁ dormant cells.

In a possible implementation of the fourth aspect, the first dormant cell belongs to the S dormant cells, and the method further includes: The first network device sends a first synchronization signal block to the terminal through the basic cell; receives first indication information sent by the terminal in the first dormant cell, where the first indication information indicates the first network device to send a second synchronization signal block to the terminal in the first dormant cell, and the first indication information has a second association relationship with the first synchronization signal block; sends the second synchronization signal block; and receives, from the terminal, a second random access channel corresponding to the second synchronization signal block.

Optionally, that the first network device receives first indication information sent by the terminal in the first dormant cell includes: separately receiving indication information in S₂ dormant cells and successfully receiving the first indication information, where the indication information of the S₂ dormant cells has a second association relationship with the first synchronization signal block, S₂≤S, and the first dormant cell belongs to the S₂ dormant cells.

In a possible implementation of the fourth aspect, the first dormant cell belongs to the S dormant cells, and the method further includes: The first network device sends P₁ reference signals to the terminal through Li dormant cells, where the Pi reference signals have an association relationship with Q₁ physical random access channels, Li, Pi, and Qi each are a positive integer, L₁≤P₁, and L₁≤S≤N; and the Li dormant cells are a part of or all of the L dormant cells that send P reference signals to UE, and the Pi reference signals are a part of or all of the P reference signals received by the terminal.

Optionally, the method further includes: receiving, from the terminal, a third random access channel corresponding to the first dormant cell, where the third random access channel has a third association relationship with a first reference signal from the first dormant cell, and the first dormant cell belongs to the Li dormant cells.

Optionally, that the first network device receives, from the terminal, a third random access channel corresponding to the first dormant cell includes: receiving corresponding random access channels in the L₁ dormant cells, where the random access channels of the L₁ dormant cells each have a third association relationship with reference signals from the Li dormant cells.

Optionally, the method further includes: receiving second indication information from the terminal, where the second indication information indicates a second network device to send a third synchronization signal block to the terminal in the first dormant cell; sending the third synchronization signal block; and receiving a fourth random access channel corresponding to the third synchronization signal block, where the second indication information has a fourth association relationship with a first reference signal, and the first reference signal belongs to Pi reference signals and is from the first dormant cell.

In a possible implementation of the third aspect or the fourth aspect, a resource position of the third random access channel is determined based on a resource position of the first reference signal, and a spatial domain parameter for sending the third random access channel is the same as a spatial domain parameter for receiving the first reference signal. A meaning of the spatial domain parameter is the same as that of the spatial domain parameter in the first aspect or the second aspect.

In a possible implementation of the third aspect or the fourth aspect, the configuration information of the N dormant cells includes at least one of the following: configuration information of reference signals respectively corresponding to the N dormant cells, configuration information of indication information of the N dormant cells, random access channel configuration information of the N dormant cells, the first association relationship, the second association relationship, the third association relationship, and the fourth association relationship.

In a possible implementation of the third aspect or the fourth aspect, the reference signal occupies a time domain resource of one symbol, or the reference signal is a primary synchronization signal.

According to the cell access method provided in the third aspect or the fourth aspect, in a multi-carrier deployment scenario, the basic cell indicates an association relationship between a system information block of the basic cell or a reference signal of the dormant cell and a wake-up signal of the dormant cell, or indicates an association relationship between the system information block of the basic cell or the reference signal of the dormant cell and a random access channel available to the dormant cell, to assist the terminal in selecting an appropriate resource to send the wake-up signal to wake up the dormant cell for access, or selecting an appropriate random access channel to directly access the dormant cell, to reduce transmission overheads of the wake-up signal or the random access channel, improve energy saving effect of the network device, and reduce a delay of accessing the dormant cell by the terminal.

According to a fifth aspect, this application further provides a communication apparatus. The communication apparatus includes units, modules, or means (means) configured to perform the steps in the first aspect or the third aspect. The communication apparatus may be a terminal or an apparatus used for the terminal.

According to a sixth aspect, this application further provides a communication apparatus. The communication apparatus includes units, modules, or means (means) configured to perform the steps in the second aspect or the fourth aspect. The communication apparatus may be a network device or an apparatus used for the network device. The network device may be a base station or an access network device that has a part of functions of the base station.

According to a seventh aspect, this application further provides a communication apparatus. The communication apparatus includes a processor and an interface circuit. The processor is configured to communicate with another apparatus through the interface circuit, and perform the method according to the first aspect or the third aspect. There are one or more processors.

According to an eighth aspect, this application further provides a communication apparatus. The communication apparatus includes a processor and an interface circuit. The processor is configured to communicate with another apparatus through the interface circuit, and perform the method according to the second aspect or the fourth aspect. There are one or more processors.

According to a ninth aspect, this application further provides a communication apparatus. The communication apparatus includes a processor, configured to invoke a program stored in a memory, to perform the method according to the first aspect or the third aspect. The memory may be located inside or outside the apparatus. In addition, there are one or more processors.

According to a tenth aspect, this application further provides a communication apparatus. The communication apparatus includes a processor, configured to invoke a program stored in a memory, to perform the method according to the second aspect or the fourth aspect. The memory may be located inside or outside the apparatus. In addition, there are one or more processors.

According to a eleventh aspect, this application further provides a computer program product. When the program is invoked by a processor, the method according to any one of the foregoing aspects is performed.

In addition, a computer-readable storage medium is provided. The computer-readable storage medium includes the program.

According to an twelfth aspect, this application provides a communication system. The communication system includes a network device and a terminal. The terminal is configured to perform the method according to the first aspect, and the network device is configured to perform the method according to the second aspect; or the terminal is configured to perform the method according to the third aspect, and the network device is configured to perform the method according to the fourth aspect.

### BRIEF DESCRIPTION OF DRAWINGS

FIG. 1 is a schematic diagram of a communication system 100 according to an embodiment of this application;
FIG. 2 is a schematic flowchart of a cell access method according to an embodiment of this application;
FIG. 3 is a schematic diagram of time domain positions of a DRS and a WUS according to an embodiment of this application;
FIG. 4 is a schematic diagram of time domain positions of a DRS and a WUS according to an embodiment of this application;
FIG. 5 is a schematic flowchart of a cell access method according to an embodiment of this application;
FIG. 6 is a schematic flowchart of a cell access method according to an embodiment of this application;
FIG. 7 is a schematic flowchart of a cell access method according to an embodiment of this application;
FIG. 8 is a schematic diagram of a structure of a communication apparatus 800 according to an embodiment of this application;
FIG. 9 is a schematic diagram of a structure of a network device according to an embodiment of this application; and
FIG. 10 is a schematic diagram of a structure of a terminal according to an embodiment of this application.

### DESCRIPTION OF EMBODIMENTS

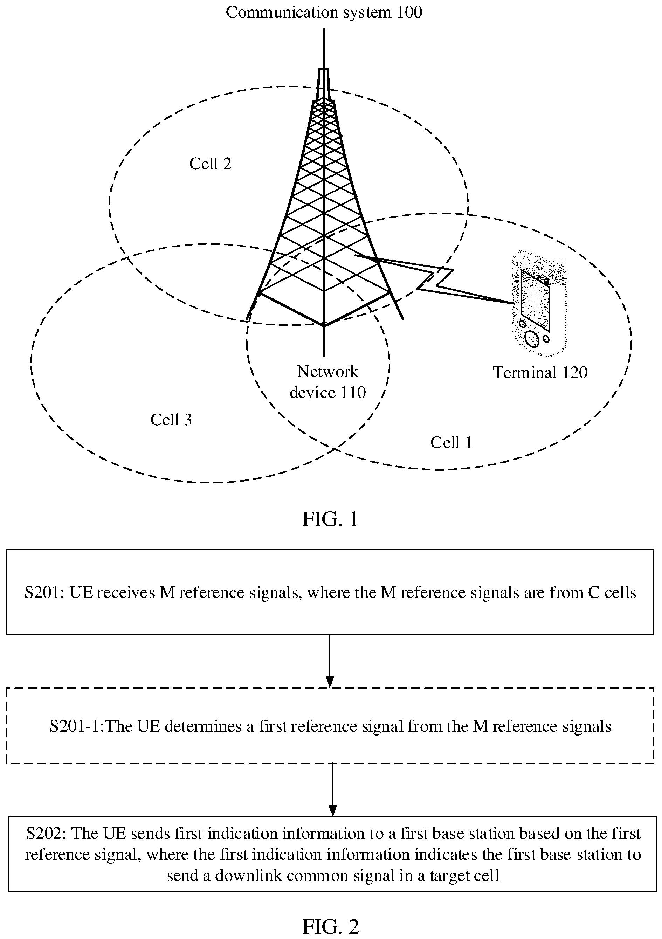

FIG. 1 is a schematic diagram of a communication system 100 according to an embodiment of this application.

As shown in FIG. 1, the communication system 100 includes a network device 110 and a terminal 120. The terminal 120 communicates with the network device 110 by using an electromagnetic wave. When the terminal 120 sends information, a wireless communication module of the terminal 120 may obtain information bits that need to be sent to the network device 110 through a channel. For example, the information bits are information bits that are generated by a processing module of a terminal, received from another device, or stored in a storage module of the terminal. Specifically, the terminal 120 may be used as an entity that sends uplink data, to send an uplink channel to the network device 110. The uplink channel may carry the uplink data. Certainly, the terminal 120 may also receive downlink data that is directly sent by the network device 110 or forwarded by a network node such as a relay device or the like.

The network device may support one or more component carriers (component carriers, CCs). The terminal may communicate with the network device in a single carrier or carrier aggregation manner. In this application, the component carrier may also be referred to as a cell. As shown in FIG. 1, a cell 1, a cell 2, and a cell 3 are deployed in the network device 110. The terminal 120 is located within coverage of the cell 1. The terminal may access the network device through the cell 1, to obtain a communication service. When the carrier aggregation manner is used, the terminal may communicate with the network device 110 through a plurality of cells, for example, through the cell 1 and the cell 2.

It should be understood that, as an example, FIG. 1 shows one network device and one terminal. Optionally, the communication system 100 may include a plurality of network devices, and another quantity of terminals may be included within coverage of each network device. This is not limited in embodiments of this application.

In this application, the terminal may be various types of devices that provide voice and/or data connectivity for a user, and may also be referred to as a terminal device, user equipment (user equipment, UE), a mobile station, a mobile terminal, or the like. The terminal may be widely applied to various scenarios such as device-to-device (device-to-device, D2D) communication, vehicle-to-everything (vehicle-to-everything, V2X) communication, machine-type communication (machine-type communication, MTC), an internet of things (internet of things, IoT), virtual reality, augmented reality, industrial control, self-driving, telemedicine, a smart grid, smart furniture, smart office, smart wear, smart transportation, a smart city, and the like. The terminal may be a mobile phone, a tablet computer, a computer with a wireless transceiver function, a wearable device, a vehicle, an unmanned aerial vehicle, a helicopter, an airplane, a ship, a robot, a robot arm, a smart home device, or the like. The terminal in this application may also be a relay node. A specific technology and a specific device form used by the terminal are not limited in embodiments of this application. In embodiments of this application, a chip used in the foregoing device may also be referred to as a terminal.

In this application, the network device may be an access network device. For example, the network device may be a base station, an evolved NodeB (evolved NodeB, eNodeB), a transmission reception point (transmission reception point, TRP), a next-generation NodeB (next-generation NodeB, gNB) in a 5th generation (5th generation, 5G) mobile communication system, a next-generation base station in a 6th generation (6th generation, 6G) mobile communication system, a base station in a future mobile communication system, an access node in a Wi-Fi system, or the like; or may be a module or a unit that completes a part of functions of the base station, for example, may be a central unit (central unit, CU), or a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete a function of a part of or all of physical layers. For specific descriptions of the protocol layers, refer to related technical specifications of the 3rd generation partnership project (3rd generation partnership project, 3GPP). The access network device may be a macro base station, or may be a micro base station or an indoor station, or may be a relay node, a donor node, or the like. A specific technology and a specific device form that are used by the network device are not limited in embodiments of this application.

In the communication system 100, the network device 110 may send a downlink common signal to the terminal in a managed cell. The downlink common signal is used by the terminal to perform initial access, or is used to implement a process such as cell link quality measurement or the like during cell camping or handover. That is, even if a terminal in a cell is not connected to the network device, the terminal still receives some downlink common signals. In an NR system, in addition to a PSS, an SSS, and a PBCH, the downlink common signal further includes a channel state information reference signal (channel state information reference signal, CSI-RS), a common channel carrying system information (system information, SI), a common channel used to carry paging, and the like. The SI includes a master information block (master information block, MIB), a system information block 1 (system information block 1, SIB 1), and other system information. The PSS, the SSS, and the PBCH are collectively referred to as a synchronization signal block (synchronization signal block, SSB).

Initial access of the terminal is a process in which the terminal in an idle (idle) state accesses the cell and changes to a connected (connected) state after being powered on, and generally includes an SSB detection process, a SIB 1 receiving process, and a random access process. That is, the SSB and the SIB 1 may be used in an initial access process of the terminal. The SSB and the SIB 1 are periodically sent, and beam scanning may need to be performed to ensure cell coverage.

In addition, if the terminal does not perform cell access after being powered on, the terminal performs cell measurement to select a cell for camping; or when the terminal enters the idle state again from the connected state, the terminal also selects a cell for camping. When camping on a specific cell, the terminal continuously monitors the SSB to be handed over to a cell to be camped on in time, and monitors downlink paging sent by the cell in the cell to be camped on, to learn whether there is data to be sent to the terminal. In another aspect, if the terminal moves, or load of a current cell to be camped on changes, or load of a cell on which the terminal currently accesses changes, the terminal may select another cell to camp on or access. The terminal may perform mobility measurement based on the current cell to be camped on and an SSB or a CSI-RS of a neighboring cell, to obtain a neighboring cell with good signal received quality as a target cell for handover.

The foregoing downlink common signals account for a large proportion in time domain. For example, in a commercial network deployment of a 3.5 GHz carrier frequency, a proportion of downlink common signals is up to 12%. Consequently, a transmit link of a network device such as a base station or the like is prevented from performing a higher proportion of time domain shutdown and sleep, and energy consumption of the network device is high even if the network device is unloaded.

To reduce energy consumption of sending the downlink common signal by the network device, a simplified sending mode is used in this application. In the mode, that the network device only sends a simplified reference signal in the cell for preliminary cell representation, and introduces signal sending mode handover triggered by the terminal includes: After receiving the simplified reference signal, the terminal sends indication information to the network device, to trigger the network device to hand over from the simplified sending mode to a normal sending mode, and send a normal downlink common signal in the cell, so that the terminal can complete the initial access.

The simplified reference signal may be a reference signal that occupies a small time domain resource, for example, may be a DRS that occupies one or more symbols. The simplified reference signal represents at least one of functions including cell existence, downlink timing maintenance, and assisting the terminal in performing cell measurement. After detecting the DRS in an idle state, the terminal may send one piece of indication information, for example, a WUS, to the network device. After receiving the WUS, the network device enters the normal sending mode, that is, starts to send the downlink common signal such as the SSB, the SI, or the like in the cell. In this way, periodical common signal sending may be changed to terminal-triggered sending, to increase a time-domain shutdown proportion of the network device when the network device is unloaded, and reduce energy consumption of the network device. The simplified sending mode may also be used in a multi-carrier deployment scenario.

In the multi-carrier deployment scenario, a plurality of data carriers of one or more network devices may provide a communication service for the terminal. The network device may set one of the data carriers as a basic component carrier (basic component carrier, BCC), normally send the downlink common signal, and broadcast system information of another data carrier. The another data carrier may enter a dormant state or the simplified sending mode when the terminal does not have a communication requirement. A data carrier that enters the dormant state or the simplified sending mode may be referred to as a dormant component carrier (dormant component carrier, DCC). The basic component carrier may also be referred to as a basic cell, and the dormant component carrier may also be referred to as a dormant cell. The basic cell and the dormant cell may be managed by a same network device, or may be respectively managed by different network devices, and both the basic cell and the dormant cell may be used as a primary cell (primary cell, Pcell) of the terminal.

For example, when the terminal has the communication requirement, the terminal may directly access the DCC based on system information of the DCC broadcast by the BCC, or may wake up the DCC by sending the indication information, for example, the WUS, and then access the DCC. For example, the BCC is a low-frequency carrier, the DCC is a high-frequency carrier, and the two carriers use different transceiver channels. In this case, if the DCC enters a dormant or simplified transceiver mode, energy consumption of a transceiver channel corresponding to the high-frequency carrier may be reduced. That is, the terminal device may directly access the DCC based on broadcast information of the BCC, and does not need to first access the BCC, wake up the DCC by using the BCC, and then hand over to the DCC. The terminal device also does not need to first access the BCC, and then access the DCC by configuring the DCC as a secondary carrier.

With reference to FIG. 2 to FIG. 7, the following describes in detail a cell access method provided in this application. The method provided in this application may be performed by a terminal or a network device, or may be performed by a communication apparatus, for example, a chip, used for the terminal or the network device. The method provided in this application may be applied to a communication system shown in FIG. 1. The following describes the method provided in this application using the terminal as UE and the network device as a base station.

FIG. 2 is a schematic flowchart of a cell access method according to an embodiment of this application. The embodiment described in FIG. 2 is described from a perspective of UE.

S201: The UE receives M reference signals, where the M reference signals are from C cells, M and C are positive integers, and M≥C.

The C cells each may belong to one or more base stations, and each base station manages one or more cells. That is, the M reference signals received by the UE may be from the one or more base stations, and each base station may send one or more of the M reference signals to the UE.

The reference signal may be the foregoing discovery reference signal, or another signal having a function similar to that of the discovery reference signal. For example, the reference signal may also be a PSS, or a PSS and an SSS.

The reference signal occupies a time domain resource of one or more symbols. Optionally, one reference signal occupies two symbols, and the two symbols are spaced by at least one symbol, so that precision of frequency offset estimation performed by the UE may be improved. For example, the two symbols occupied by the reference signal are spaced by two symbols or three symbols.

Optionally, the reference signal and an SSB of a same cell as the reference signal are located at a same time domain position. For example, the reference signal is located in the first symbol in which the SSB is located, or is located in the first symbol and the third symbol of the SSB. In addition, different reference signals of a same cell may be located at different time domain positions of the SSB. In this way, a sending/detection periodicity of the reference signal is consistent with a detection periodicity of the SSB, and beam scanning of the reference signal is completed within the detection periodicity of the SSB, to reduce reference signal processing time, and reduce a delay of accessing a target cell by the UE.

In this application, the reference signal does not include one or more types of system information. The system information includes any one or more of the following: a MIB, scheduling information of a SIB 1, number information of a time unit in which a downlink common signal is located, or random access channel configuration information. The random access channel configuration information includes a time-frequency resource position and sequence information of a random access channel. In this embodiment of this application, the time unit may be a radio frame, a subframe, a slot, a sub-slot, or a symbol.

Optionally, the one or more base stations separately send the M reference signals to the UE through the C cells. Correspondingly, the UE attempts to perform blind detection on the M reference signals, and finally successfully receives M₁ reference signals, where M₁≤M.

Optionally, the one or more base stations separately send M₂ reference signals to the UE through C' cells. Correspondingly, the UE attempts to perform blind detection on the M₂ reference signals, and finally successfully receives the M reference signals, where M≤M₂, and C≤C'. In addition, the M reference signals correspond the C cells.

It may be understood that a quantity of reference signals sent by one base station may be greater than or equal to a quantity of cells managed by the base station. That is, the base station may send a plurality of reference signals to the UE through any cell managed by the base station, to increase a success rate of receiving a reference signal of the cell by the UE. For example, the UE may receive two or more reference signals from one cell. The two or more reference signals are consecutive in time domain, or two adjacent reference signals in time domain are spaced by at least one symbol.

Optionally, when a plurality of reference signals are sent in one cell, the reference signals may be sent periodically, or may be sent based on a given pattern (pattern), for example, sent at one or more positions in one periodicity. Assuming that a sending periodicity is 4 milliseconds, and the given pattern is "1100", it indicates that the first sending position and the second sending position may be used to send the reference signals. Optionally, the plurality of reference signals in one cell have different spatial domain parameters. For example, spatial domain parameters correspond to different beam directions.

Optionally, in an implementation of this application, any one of the M reference signals, for example, a first reference signal, carries a cell identity. The cell identity may be a physical cell identity (physical cell identity, PCI) or a local cell identity. The PCI is a physical cell identity defined in the 3GPP NR protocol TS38.211. For example, a value of the PCI may be 0 to 1007. In comparison with the PCI, the local cell identity occupies fewer bits, and signaling overheads may be reduced. That is, the reference signal explicitly carries the cell identity.

Optionally, in an implementation of this application, the reference signal implicitly indicates the cell identity.

For example, one reference signal is one sequence, different cell identities correspond to different sequences, and different cell identities may correspond to different root sequences or different cyclic shifts of one root sequence. A sequence representing the reference signal is received, so that the UE may learn that the reference signal is from a specific cell.

For another example, the cell identity may be implicitly indicated by using a time domain position or a frequency domain position of the reference signal. Specifically, when the UE receives a plurality of reference signals, different reference signals have different frequency domain positions. Different frequency domain positions correspond to different cells. Therefore, the UE may determine the cell that the reference signal is from based on the frequency domain position of the reference signal. Alternatively, when the UE receives a plurality of reference signals, different reference signals have different time domain positions. Different time domain positions correspond to different cells. Therefore, the UE may determine the cell that the reference signal is from based on the time domain position of the reference signal.

That the cell identity is implicitly indicated by using a frequency domain position is used as an example. A frequency domain position of one reference signal may be determined based on a center frequency or a start frequency of a cell in which the reference signal is located and a frequency domain offset. For example, the frequency domain position of the reference signal is determined based on the center frequency or the start frequency of the cell plus one frequency domain offset. The frequency domain offset may be Δ_{DRS}×PCIl_{ocal}, so that reference signals corresponding to different cells are located in different frequency domain resources, where Δ_{DRS} is a preset value, and PCI_{local} is a value of the cell identity.

Optionally, the cell identity is the local cell identity. A value of the local cell identity is an integer greater than or equal to 0 and less than or equal to N-1, and N is less than a maximum value of the PCI.

For example, the local cell identity and a value of the physical cell identity satisfy the following relationship:
V=V_{PCI} mod N, where N is a positive integer, V represents the value of the local cell identity, and V_{PCI} represents the value of the PCI.

N may be a predefined positive integer. For example, N may be the same as the quantity of cells managed by the base station, or N may be the same as a quantity of neighboring cells that the base station expects to distinguish. For example, N may be preset to be one of 3, 7, 21, 19, or 57, or one of 2, 4, 8, 16, or 32. N=21 is used as an example. Assuming that values of PCIs of the C cells are 0 to 62, local cell identities of cells whose PCIs are 0 to 20, 21 to 41, and 42 to 62 are all 0 to 20, and there are 21 cells that may be distinguished based on the local cell identities.

Optionally, in an implementation of this application, any one of the M reference signals, for example, the first reference signal, includes paging indication information. The paging indication information indicates whether data of UE belonging to P terminal groups arrives at the base station, or the paging indication information indicates whether the base station sends data to UE belonging to one or more of the P terminal groups. The UE receiving the reference signal in S201 belongs to one of the P terminal groups, and p is a positive integer. Optionally, P>1. A core network first sends data used by one or more UEs for communication to the base station, and then the base station sends the data to corresponding UE.

Optionally, the paging indication information includes P bits indicating the P terminal groups. The i^{th} bit in the P bits indicates whether data of one or more UEs in the i^{th} terminal group arrives at the base station, i is a positive integer, and i≤P. Specifically, each bit represents one terminal group. When a value of a specific bit is 1, it indicates that data of UE in a corresponding terminal group arrives at the base station, or when the value of the bit is 0, it indicates that no data of the UE in the corresponding terminal group arrives at the base station; and vice versa. Details are not described. For example, if the paging indication information includes "01010", data of UE in the second terminal group and the fourth terminal group arrives at the base station.

Optionally, the paging indication information includes Q bits. The Q bits indicate that data of one or more UEs in one of the P terminal groups arrives at the base station, and Q is a positive integer. For example, if the terminal group quantity P=7, the paging indication information includes ceil[log₂(1+P)]=3 bits, that is, Q=3, where log₂ represents a logarithmic function with base 2, and ceil[x] represents rounding up x. When a value of the Q bits is "000", it indicates that no data of the terminal arrives at the base station; when the value of the Q bits is "001 ", it indicates that data of a terminal in a group 1 arrives at the base station; when the value of the Q bits is "010", it indicates that data of a terminal in a group 2 arrives at the base station; and by analogy, when the value of the Q bits is "111", it indicates that data of a terminal in a group 7 arrives at the base station.

S202: The UE sends first indication information to a first base station based on the first reference signal, where the first indication information indicates the first base station to send the downlink common signal in the target cell.

The downlink common signal is used by the UE to access the target cell, the downlink common signal includes the system information, and the first reference signal belongs to the M reference signals and is from the target cell. For specific descriptions of a type of the system information, refer to related content in S201. Details are not described.

Optionally, in an implementation of this application, the method further includes S201-1: The UE determines the first reference signal from the M reference signals.

Specifically, the UE may select one reference signal from one or more reference signals that are successfully received from the M reference signals as the first reference signal. Correspondingly, a cell in which the first reference signal is located is the target cell.

Optionally, signal received quality may be used as a basis for the UE to determine the first reference signal. The UE may select a reference signal with best signal received quality as the first reference signal. It may also be understood as that the UE determines, based on signal received quality of the M reference signals, a cell corresponding to the reference signal with the best signal received quality as the target cell. The signal received quality may be represented by a parameter such as a reference signal received power (reference signal received power, RSRP), reference signal received quality (reference signal received quality, RSRQ), or the like.

The first base station is one of the one or more base stations that send the M reference signals to the UE, and the first base station manages the target cell. The UE determines, based on the determined first reference signal, that the UE may access one cell managed by the first base station. The target cell is a cell that the terminal expects to access, a cell that the terminal expects to camp on, or a target cell that the terminal expects to be handed over to. This is not particularly limited in this application.

It may be understood that the first indication information corresponds to the first reference signal from the target cell. The UE may determine a time domain position of the first indication information to be sent to the first base station based on a time domain position of the first reference signal.

In an existing cell access procedure, information such as a synchronization signal, the system information, and the like needs to be broadcast in the cell. The UE completes timing and measurement based on the synchronization signal, and then obtains basic cell configuration information based on the system information, for example, configuration information used by the UE to send random access, so that the random access may be initiated to complete cell access. However, according to the cell access method in this application, before sending the first indication information, the UE does not need to obtain the system information. In other words, the base station only sends the reference signal to the UE and does not need to send the system information when the cell is in an idle state. After the UE sends the first indication information based on the first reference signal to wake up the cell managed by the first base station, the first base station sends the system information or a complete reference signal and the system information through the woken-up cell, to reduce signaling overheads, and reduce energy consumption of the base station.

The first indication information may be the foregoing wake-up signal, or other information that has a function of indicating the base station to send the downlink common signal in the target cell. The following describes the cell access method provided in this application by using an example in which the first indication information is a wake-up signal.

Optionally, the wake-up signal carries a cell identity of the target cell, and the cell identity of the target cell may be the physical cell identity or the local cell identity.

Optionally, the wake-up signal implicitly indicates the cell identity of the target cell.

For example, the wake-up signal is a sequence corresponding to the cell identity of the target cell. For example, if the wake-up signal is a preamble (preamble) of a physical random access channel (physical random access channel, PRACH), a sequence generation parameter (a root sequence u) of the preamble may be in a one-to-one correspondence with the cell identity, so that the corresponding cell identity may be obtained by using the preamble. For example, u=PCI_{local} mod L_{RA}, where PCI_{local} represents the local cell identity, L_{RA} represents a value range of the root sequence, and L_{RA} is a predefined positive integer.

For another example, the cell identity of the target cell may be implicitly indicated by using a frequency domain position or a time domain position of the wake-up signal.

When the reference signals of different cells are located at different frequency domain positions, because one reference signal and a corresponding wake-up signal may have a preset frequency domain offset, wake-up signals of different cells are located at different frequency domain positions. The first base station may determine a cell that the UE expects to wake up by using the frequency domain position of the wake-up signal. Alternatively, when the reference signals of different cells are located at a same frequency domain position and the reference signal carries the cell identity, because a frequency domain offset between one reference signal and a corresponding wake-up signal may be related to the cell identity, that is, different cell identities correspond to different frequency domain offset, wake-up signals of different cells are located at different frequency domain positions. The first base station may determine a cell that the UE expects to wake up by using the frequency domain position of the wake-up signal.

When the reference signals of different cells are located at different time domain positions, because one reference signal and a corresponding wake-up signal may have a preset time domain offset, wake-up signals of different cells are located at different time domain positions. The first base station may determine a cell that the UE expects to wake up by using the time domain position of the wake-up signal. Alternatively, when the reference signals of different cells are located at a same time domain position and the reference signal carries the cell identity, because a time domain offset between one reference signal and a corresponding wake-up signal may be related to the cell identity, that is, different cell identities correspond to different time domain offset, wake-up signals of different cells are located at different time domain positions. The first base station may determine a cell that the UE expects to wake up by using the time domain position of the wake-up signal.

A manner in which the wake-up signal carries the cell identity of the target cell may be the same as or different from a manner in which the reference signal carries the cell identity. For example, the reference signal explicitly carries the cell identity, and the wake-up signal may explicitly carry or implicitly indicate the cell identity of the target cell; or the reference signal implicitly indicates the cell identity, and the wake-up signal may explicitly carry or implicitly indicate the cell identity of the target cell; or the reference signal may indicate the cell identity by using the frequency domain position, and the wake-up signal may indicate the cell identity by using the frequency domain position or the time domain position; or the reference signal may indicate the cell identity by using the time domain position, and the wake-up signal may indicate the cell identity by using the frequency domain position or the time domain position.

It may be understood that different UEs may send the wake-up signal to the base station at a same time-frequency resource position by using a same sequence.

Optionally, in an implementation of this application, the UE sends the wake-up signal to the base station by using a predefined transmit power. Optionally, the predefined transmit power is a predefined absolute value, for example, 23 decibel-milliwatts (decibel-milliwatts, dBms), or the predefined transmit power is a maximum transmit power of the UE, or the predefined transmit power is a minimum value between the predefined absolute value and the maximum transmit power of the UE.

Optionally, the UE sends the wake-up signal by using a fixed transmit power. Power control is performed on sending of the wake-up signal, so that the base station may better estimate a transmission path loss based on power strength of the received wake-up signal, to determine a distance from the UE to the base station. The base station may use the estimated distance to assist in determining whether to wake up the cell. For example, in a case in which the wake-up signal does not carry the cell identity, the base station decides to wake up a cell that is close to the UE and whose signal received quality is good based on the estimated distance and signal received quality of the wake-up signal.

Optionally, the UE sends the wake-up signal by using the maximum transmit power, so that a success rate of receiving and detecting the wake-up signal by the base station may be increased.

Optionally, the downlink common signal includes the system information, but does not include the synchronization signal, for example, includes at least scheduling information of the MIB or the SIB 1.

Optionally, the downlink common signal includes the synchronization signal and the system information, for example, includes the SSB, or further includes any one or more of signals such as a CSI-RS, the SIB 1, and the like in addition to the SSB. Specifically, when the UE is in a different communication process, a type of the downlink common signal is different. For example, if the UE is in an initial access process, the downlink common signal further includes the SIB 1. For another example, if the UE needs to be handed over to a dormant cell, the downlink common signal may further include the CSI-RS.

It may be understood that, even if the downlink common signal includes a plurality of types of signals, it only indicates that the first base station sends the plurality of types of signals to the UE. However, this application does not limit that the plurality of types of signals need to be sent at the same time. A specific manner of sending the downlink common signal is determined based on a communication process in which the UE is located. For example, in the initial access process, the UE first detects the SSB, and then receives the SIB 1. That is, the first base station first sends the SSB to the UE, and then sends the SIB 1. Details of another downlink common signal sending process are not described.

After determining the first reference signal, the UE sends, to the base station, a wake-up signal corresponding to the target cell. The first reference signal and the wake-up signal may be located in a same time division duplex (time division duplex, TDD) frame structure. The first reference signal is located in a downlink part of the TDD frame structure, and the wake-up signal is located in an uplink part of the TDD frame structure.

Optionally, in an implementation of this application, to reduce a delay in successfully detecting a part of or all of the M reference signals by the UE, one base station may send a plurality of reference signals of a same cell in a downlink part of one TDD frame structure, and the plurality of reference signals may be located in different beam directions. In the implementation, a time domain offset between the reference signal and the corresponding wake-up signal may be set, so that a wake-up signal corresponding to each reference signal may be located in the uplink part of the TDD frame structure, to reduce the delay of accessing the target cell by the UE.

Optionally, any one of the M reference signals, for example, the first reference signal, carries a time domain offset. The time domain offset indicates an offset between the time domain position of the first reference signal and the time domain position of the wake-up signal. The UE may set a position of the wake-up signal in the uplink part of the TDD frame structure by obtaining the time domain offset. It may be understood that different reference signals from a same cell may correspond to different time domain offsets. The time domain offset may be determined based on the time domain position of the reference signal.

In the implementation, the UE may determine the time domain position of the wake-up signal based on the time domain position of the first reference signal and a time domain offset carried in the first reference signal, and send the wake-up signal at the determined time domain position.

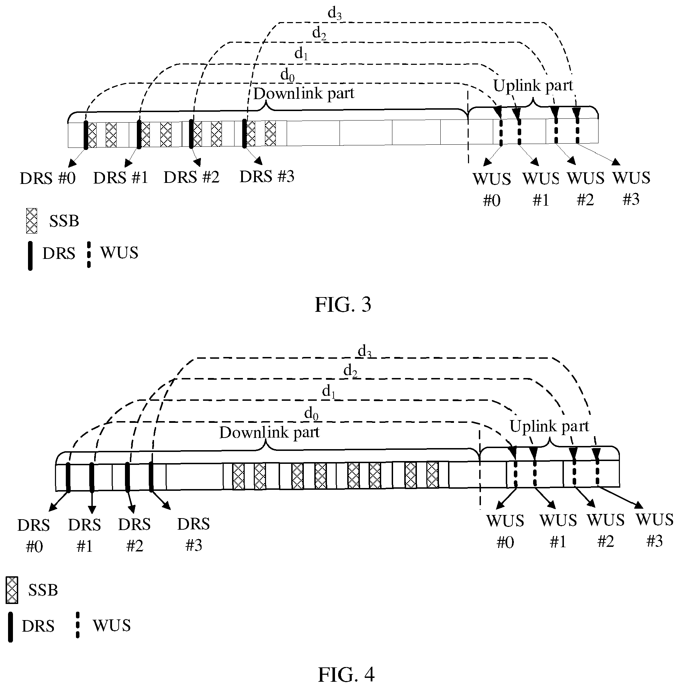

Specifically, the time domain offset corresponds to the reference signal. One reference signal has one corresponding time domain offset. As shown in FIG. 3, a 7:1:2 TDD frame structure is used. The TDD frame structure uses 10 slots as a periodicity. Seven slots are used for transmission of downlink information, one slot is used for handover from uplink transmission to downlink transmission, and two slots are used for transmission of uplink information. Assuming that a DRS #0 to a DRS #3 are DRSs, from a same cell, that are located in different beam directions, the DRS #0 to the DRS #3 are located in a same uplink and downlink periodicity, and the DRS #0 to the DRS #3 are respectively located in first symbols of an SSB #0, an SSB #2, an SSB #4, and an SSB #6, each reference signal corresponds to one wake-up signal (a WUS #0 to a WUS #3). The base station respectively includes time domain offsets d₀ to d₃ in the DRS #0 to the DRS #3. d0 to d₃ are used, so that the WUS #0 to the WUS #3 can be located in the uplink part of the time division duplex frame structure.

Optionally, in an implementation of this application, there is a predefined time domain offset between the time domain position of the first reference signal and the time domain position of the wake-up signal.

In the implementation, any reference signal received by the UE does not need to carry a value of the time domain offset. The UE sets the wake-up signal in the uplink part of the TDD frame structure by using the predefined time domain offset. A same time domain offset may be used for a plurality of reference signals from a same cell, and it may be understood that different UEs may also use a same predefined time domain offset. In the implementation, the base station that is to send a reference signal may determine a time domain position of the reference signal based on the predefined time domain offset. That is, the base station may first adjust the time domain position of the reference signal, so that after receiving the reference signal, the UE may set the wake-up signal in the uplink part of the TDD frame structure based on the time domain position of the reference signal and the predefined time domain offset.

In the implementation, the UE may determine the time domain position of the wake-up signal based on the time domain position of the first reference signal and the predefined offset, and send the wake-up signal at the determined time domain position.

In a specific implementation of the base station, the reference signal may be located in the uplink part of the TDD frame structure. Therefore, in an implementation, in addition to predefining the time domain offset, it may be further specified in advance that the time domain position of the reference signal is located in the downlink part of the TDD frame structure, and the time domain position of the wake-up signal is located in the uplink part of the TDD frame structure.

Optionally, there may be different sending manners for the reference signal, so that the wake-up signal is located in the uplink part of the TDD frame structure with reference to the time domain offset. The sending manner of the reference signal includes: Manner 1: The plurality of reference signals from a same cell are distributed in a plurality of uplink and downlink periodicities, and only one reference signal is sent during each uplink and downlink periodicity. With reference to time domain offsets corresponding to the reference signals, only one reference signal and a corresponding wake-up signal exist in one uplink and downlink periodicity. Manner 2: The plurality of reference signals from a same cell are distributed in one uplink and downlink periodicity, and the base station may adjust a time domain distance between the reference signals based on the predefined time domain offset, that is, determine that the reference signal is located at an appropriate time domain position, so that the wake-up signal may be located in the uplink part of the TDD frame structure. The uplink and downlink periodicity may also be referred to as a TDD frame structure periodicity. One uplink and downlink periodicity may be one radio frame, a plurality of radio frames, a 1/2 radio frame, or the like. For example, one TDD frame structure periodicity includes five slots, 10 slots, or 20 slots. A flexible sending manner is used, so that transmission of the reference signal may adapt to different communication scenarios, for example, adapt to different TDD frame structure periodicities.

As shown in FIG. 4, a 7:1:2 TDD frame structure is used. Assuming that a DRS #0 to a DRS #3 are from a same cell, and are located in a same uplink and downlink periodicity, and the preset time domain offset is d, the base station determines that time domain positions of the DRS #0 to the DRS #3 are located outside the SSB, and the UE separately offsets d based on the time domain positions of the DRS #0 to the DRS #3, to obtain a WUS #0 to a WUS #3. The WUS #0 to the WUS #3 are all located in the uplink part of the TDD frame structure.

Optionally, in an implementation of this application, a spatial domain parameter used by the UE to receive the reference signal is the same as a spatial domain parameter used by the UE to send the wake-up signal. The spatial domain parameter may be a related parameter, for multi-antenna signal processing, that is used when the UE receives or sends information on a plurality of transceiver antennas or digital ports. In this application, the spatial domain parameter may include one or more of parameters used in port mapping or port combination, pre-encoding processing or equalization processing, beamforming processing, or combining reception processing. Correspondingly, a spatial domain parameter used by the base station to send the reference signal is the same as a spatial domain parameter used by the base station to receive the corresponding wake-up signal. In addition, after the base station receives the wake-up signal, if sending of the downlink common signal is triggered, a spatial domain parameter used to send the downlink common signal is the same as the spatial domain parameter used to receive the wake-up signal. A spatial domain parameter used by the UE to send a physical random access channel (physical random access channel, PRACH) is the same as a spatial domain parameter used by the UE to receive a corresponding SSB. The base station detects, on a PRACH resource, whether the UE sends the PRACH. In this case, the base station also detects the PRACH by using a same spatial domain parameter as that used for sending the SSB. The base station and the UE use a same spatial domain parameter when sending and receiving a signal, so that the signal received quality may be improved.

For example, that a spatial domain parameter used by the UE to receive the reference signal is the same as a spatial domain parameter used by the UE to send the wake-up signal may include one or more of the following: a multi-port combination matrix used when the UE receives the reference signal is the same as a multi-port precoding matrix used when the UE sends the wake-up signal; or a multi-antenna receive beam used when the UE receives the reference signal is the same as a multi-antenna transmit beam used when the UE sends the wake-up signal, that is, weight vectors on a plurality of antennas are the same; or a multi-antenna spatial filter parameter used when the UE receives the reference signal is the same as a multi-antenna spatial filter parameter used when the UE sends the wake-up signal.

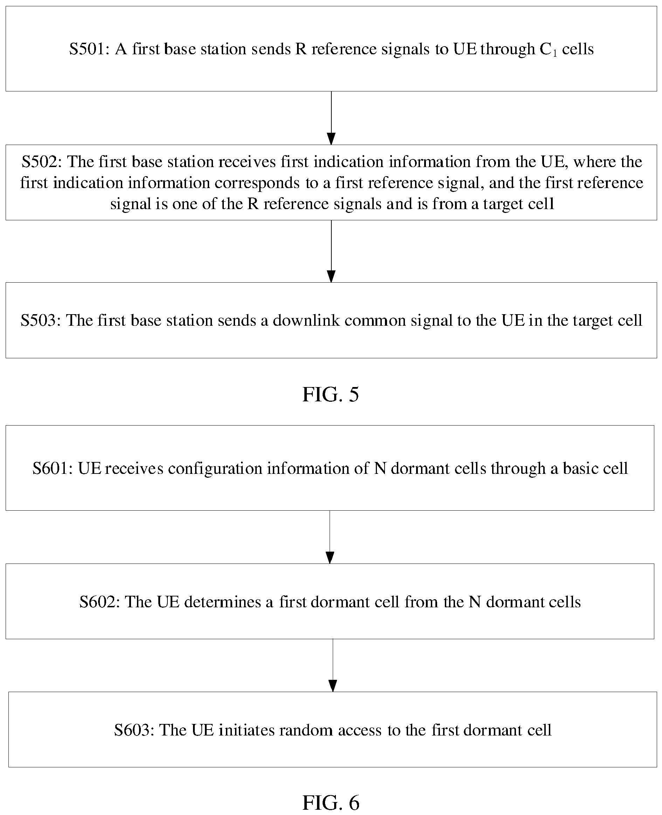

FIG. 5 is a schematic flowchart of a cell access method according to an embodiment of this application. The embodiment shown in FIG. 5 is described from a perspective of a base station. The embodiment shown in FIG. 5 and the embodiment shown in FIG. 2 to FIG. 4 are mutually referenced. Content that has been described in the embodiment shown in FIG. 2 to FIG. 4 is not described.

S501: A first base station sends R reference signals to UE through C₁ cells, where R and C₁ are positive integers, and R≥C₁.

As described in the embodiment shown in FIG. 2, the M reference signals each are from the one or more base stations. The one or more base stations send the M reference signals to the UE, and the first base station is one of the one or more base stations. That is, the first base station sends the R reference signals in the M reference signals, where M is greater than or equal to R. The C₁ cells belong to the foregoing C cells, and the C₁ cells are all managed by the first base station. In addition, it may be understood that the first base station may manage more cells than the C₁ cells.

S502: The first base station receives first indication information from the UE, where the first indication information corresponds to a first reference signal, and the first reference signal is one of the R reference signals and is from a target cell.

The first indication information indicates the first base station to send a downlink common signal in the target cell.

The downlink common signal is used by the UE to access the target cell, and the downlink common signal includes system information.

The following still uses the first indication information as a wake-up signal for description.

Specifically, the first base station may attempt to detect the wake-up signal at time-frequency resource positions of R wake-up signals respectively corresponding to the R reference signals. If the base station detects a corresponding wake-up signal at a wake-up signal position corresponding to the first reference signal, the base station may wake up the target cell, and send the downlink common signal in the target cell.

Optionally, in an implementation, detecting the wake-up signal includes detecting a received power of the wake-up signal. If a received power of one or more wake-up signals is greater than a preset threshold, it indicates that the base station can detect the one or more wake-up signals. Further, after detecting the one or more wake-up signals, the base station may determine a specific cell that is to be handed over to a normal downlink common signal sending mode based on cell identities separately carried in the detected one or more wake-up signals, that is, the base station may determine a specific cell that is used as the target cell based on the detected one or more wake-up signals, to wake up the target cell, and send the downlink common signal in the target cell. Optionally, if the base station detects a plurality of wake-up signals, the base station may wake up a plurality of cells corresponding to the wake-up signals, or the base station may determine, based on signal received quality of the detected wake-up signals, cells corresponding to one or more wake-up signals with best wake-up signal received quality.

Optionally, in an implementation, detecting the wake-up signal may include identifying a cell identity carried in the wake-up signal. For example, it is assumed that, under a premise that different wake-up signals carry different cell identities, the base station receives the wake-up signal, identifies a cell identity carried in a wake-up signal with a maximum received power, and compares the received power of the wake-up signal corresponding to the cell identity with the preset threshold, to determine whether the wake-up signal is successfully received. For example, if the received power is greater than the preset threshold, it indicates that the wake-up signal is successfully received, and a cell corresponding to the cell identity carried in the wake-up signal is the target cell.

Optionally, in an implementation, a spatial domain parameter for sending the first reference signal by the first base station is the same as a spatial domain parameter for receiving the wake-up signal by the first base station. For specific descriptions of the spatial domain parameter, refer to related content in the embodiment shown in FIG. 2. Details are not described.

S503: The first base station sends the downlink common signal to the UE in the target cell.

For descriptions of a type of the downlink common signal, an application scenario, and the like, refer to related content in another part of this specification. Details are not described.

According to the cell access method provided in the embodiment in FIG. 2 to FIG. 5, a transmission manner of the reference signal and corresponding indication information is designed, so that the base station may transmit only the reference signal but not the downlink common signal when the base station is in an idle state. When the UE needs to access a cell, the UE sends, to the base station, the indication information corresponding to the reference signal, to indicate the base station to send the downlink common signal in a cell corresponding to the reference signal, so that energy consumption of the base station is reduced when the base station is in the cell idle state. First, the cell identity is implicitly or explicitly indicated in the reference signal, so that the UE may identify different cells, and actively determine a specific cell to be woke up based on signal received quality of reference signals of different cells. Second, it is clear that the reference signal and the corresponding indication information may be respectively located in a downlink part and an uplink part of a TDD frame structure, so that transmission of the reference signal and the indication information does not conflict with a frame structure used by an entire communication system. Third, beam scanning is performed on the reference signal, to improve coverage of the reference signal, and spatial domain parameters used by the UE to receive the reference signal and to send the corresponding indication information are consistent, so that received quality of the indication information received by the base station may be improved, and a probability that the base station successfully receives the indication information is increased.

FIG. 6 is a schematic flowchart of a cell access method according to this application. The embodiment shown in FIG. 6 describes a method for accessing a dormant cell by UE in a multi-carrier deployment scenario. The embodiment shown in FIG. 6 is described from a perspective of the UE. For same terms in the embodiment shown in FIG. 6, refer to the foregoing embodiments shown in FIG. 2 to FIG. 5. Content described in the foregoing embodiments is not described.

As shown in FIG. 6, the method includes the following steps.

S601: The UE receives configuration information of N dormant cells through a basic cell, where N is a positive integer.

The basic cell may be the foregoing BCC, and a base station may normally send a downlink common signal such as an SSB to the UE in the basic cell. The dormant cell may be the foregoing DCC, and the dormant cell does not send the downlink common signal when the dormant cell is in a cell idle state. The cell idle state means that there is no UE in a connected state in a cell, or all UEs in the cell are in the idle state. It may be understood that, although the dormant cell does not send the downlink common signal, the dormant cell may still receive information sent by the UE. Optionally, the dormant cell does not send the downlink common signal when the dormant cell is in a state other than the cell idle state.

A base station to which the basic cell belongs may broadcast the configuration information of the dormant cell. Specifically, the base station may broadcast a dormant cell list of the N dormant cells and configuration information of dormant cells in the list in the basic cell. The configuration information of the dormant cells may include one or more of the following: a downlink timing offset of the dormant cell relative to the basic cell, a frequency offset of the dormant cell relative to the basic cell, and a SIB 1 of the dormant cell. The SIB 1 of the dormant cell may include one or more of information such as an SSB configuration, a reference signal configuration, a wake-up signal configuration, or a PRACH configuration of the dormant cell.

For ease of description, the base station to which the basic cell belongs is referred to as a first base station below. It may be understood that the N dormant cells may be managed by the first base station and/or one or more other base stations. When a part of or all of the N dormant cells are managed by another base station, the another base station may send configuration information of a dormant cell managed by the another base station to the first base station in a transmission manner such as an optical fiber or the like, and then the basic cell of the first base station sends the configuration information to the UE.

Optionally, the configuration information further includes one or more of an association relationship (an association relationship #1) between an SSB of the basic cell and a PRACH of the dormant cell, an association relationship (an association relationship #2) between the SSB of the basic cell and a wake-up signal of the dormant cell, an association relationship (an association relationship #3) between a reference signal of the dormant cell and the PRACH of the dormant cell, and an association relationship (an association relationship #4) between the reference signal of the dormant cell and the wake-up signal of the dormant cell. Optionally, the configuration information further includes an association relationship (an association relationship #5) between the SSB of the basic cell and the reference signal of the dormant cell. Optionally, these association relationships are indicated in a SIB 1 of the dormant cell, and the SIB 1 of the dormant cell is sent in the basic cell.

The reference signal configuration of the dormant cell may indicate a time-frequency resource position and a used sequence for sending the reference signal by the dormant cell. The wake-up signal configuration of the dormant cell indicates a time-frequency resource position and a sending sequence for sending the wake-up signal by the UE in the dormant cell. For example, a time domain position for sending the wake-up signal may be determined by indicating a relative time domain offset of the wake-up signal relative to the SSB of the basic cell or the reference signal of the dormant cell.

Optionally, the first base station indicates a priority of the N dormant cells to the UE. The N dormant cells in the dormant cell list may be arranged in a priority order, for example, arranged in descending order of the priority; or the priority of the N dormant cells may be separately broadcast by the base station in the basic cell. This is not limited. Optionally, the UE selects a first dormant cell for access based on a priority order suggested by the first base station and with reference to signal received quality of the dormant cells. It may be understood that the first base station merely provides a suggestion on the priority order. In this application, the UE is not limited to selecting a dormant cell with a highest priority based on the priority order indicated by the first base station. The priority may be comprehensively determined by the first base station based on conditions such as load and a coverage capability of the dormant cell. This is not limited.

Optionally, the association relationship #1 includes one mapping table or one virtual table, and one row in the table is used to map one SSB detected in the basic cell to one or more PRACHs configured in the dormant cell. A specific mapping form is not specified. A spatial domain parameter for sending one PRACH by the UE in the dormant cell is the same as a spatial domain parameter for detecting, by the UE, a corresponding SSB in the basic cell.

Optionally, the first base station implicitly indicates the association relationship #1. Specifically, the base station may indicate an association relationship between the SSB (which is referred to as an SSB #1 below) of the basic cell and an SSB (which is referred to as an SSB #2 below) of the first dormant cell to the UE, and a correspondence between the SSB #2 and the PRACH may be included in the configuration information, of the dormant cell, that is obtained by the UE in S601. Therefore, the UE may learn of a correspondence between the SSB #1 and an available PRACH of the first dormant cell. The UE may send the PRACH on a PRACH resource corresponding to the SSB #2. For example, in a C frequency band (C-band), there are generally only eight SSBs, but in a millimeter wave (mmWave) frequency band, there are more than 64 SSBs. Assuming that there are 64 SSBs in a mmWave, if the UE sends PRACHs on PRACH resources corresponding to the 64 SSBs, overheads are large. Therefore, the base station may indicate, to the UE in the basic cell, that one SSB in the C-band is associated with eight SSBs in the mm Wave. In this way, after detecting one SSB in the C-band, the UE needs to send the PRACHs on PRACH resources corresponding to a maximum of eight SSBs in the mmWave, to save a transmission resource. Through an implicit indication, an existing association relationship between the SSB and the PRACH may be reused. In comparison with an association relationship, between the SSB #1 of the basic cell and the PRACH of the dormant cell, that is defined by a cross carrier, because quantities of SSBs in different frequency bands are generally in a multiple relationship, the foregoing manner of defining the association relationship between the SSB #1 and the SSB #2 is simpler.

Optionally, the association relationship #2 includes one mapping table or one virtual table, and one row in the table is used to map one SSB detected in the basic cell to one or more wake-up signals configured in the dormant cell. A specific mapping form is not specified. A spatial domain parameter for sending one wake-up signal by the UE in the dormant cell is the same as the spatial domain parameter for detecting, by the UE, the corresponding SSB in the basic cell. Optionally, the association relationship #2 further indicates a time domain position and/or a frequency domain position of one or more wake-up signals corresponding to one SSB.

Optionally, the association relationship #3 includes one mapping table or one virtual table, and one row in the table is used to map one reference signal detected in the dormant cell to the one or more PRACHs configured in the dormant cell. A specific mapping form is not specified. The spatial domain parameter for sending the PRACH by the UE in the dormant cell is the same as a spatial domain parameter for detecting, by the UE, a corresponding reference signal in the dormant cell. Optionally, the configuration information that includes the association relationship #3 further includes the reference signal configuration of the dormant cell.

Optionally, in another implementation, the association relationship #3 is an association relationship between a reference signal and a PRACH group within a detection periodicity of one reference signal. Specifically, PRACHs available to the UE may be divided into one or more PRACH groups. Each group includes one or more PRACHs, and each PRACH group may correspond to a reference signal of one dormant cell. Different PRACHs in the PRACH group may occupy different time-frequency resource positions or use different sending sequences at a same time-frequency resource position. The UE may learn of, by obtaining the association relationship #3, a time-frequency resource position of a PRACH corresponding to the reference signal. Therefore, if the UE receives the reference signal sent by the base station, the UE may obtain a PRACH group corresponding to the reference signal, and initiate random access to a corresponding dormant cell through a PRACH in the PRACH group.

Optionally, the association relationship #4 includes one mapping table or one virtual table, and one row in the table is used to map one reference signal detected in the dormant cell to the one or more wake-up signals configured in the dormant cell. A specific mapping form is not specified. The spatial domain parameter for sending the wake-up signal by the UE in the dormant cell is the same as the spatial domain parameter for detecting, by the UE, the corresponding reference signal in the dormant cell. Optionally, the configuration information that includes the association relationship #4 further includes the reference signal configuration of the dormant cell. Optionally, the association relationship #4 further indicates a time domain position and/or a frequency domain position of one or more wake-up signals corresponding to one reference signal.

Optionally, the association relationship #5 includes one mapping table or one virtual table, and one row in the table is used to map one SSB detected in the basic cell to one or more reference signals configured in the dormant cell. A specific mapping form is not specified. Optionally, the configuration information that includes the association relationship #5 further includes the reference signal configuration of the dormant cell. Optionally, the association relationship #5 further indicates a time domain position and/or a frequency domain position of one or more reference signals corresponding to one SSB.

For specific descriptions of the spatial domain parameter, refer to related content in the embodiment shown in FIG. 2. Details are not described herein.

S602: The UE determines the first dormant cell from the N dormant cells.

The UE may determine a dormant cell to be accessed, namely, the first dormant cell, from the N dormant cells based on a condition such as cell signal received quality or the like.

S603: The UE initiates the random access to the first dormant cell.

Through the foregoing S601 to S603, in the multi-carrier deployment scenario, the first base station may maintain normal sending of the downlink common signal only in one basic cell, and does not send any downlink signal or only sends a simplified downlink signal in another dormant cell, to save energy of the dormant cell. In addition, the basic cell broadcasts the configuration information of the dormant cell in the downlink common signal. After obtaining the configuration information, the UE may directly access the dormant cell or indicate the base station to wake up the dormant cell, so that the UE does not need to first access the basic cell and then wake up the dormant cell to perform cell handover, and does not need to first access the basic cell and then configure the dormant cell as a secondary cell to access the secondary cell. This reduces an overall access delay of accessing the dormant cell by the UE.

Optionally, in an implementation of this application, the method further includes: The UE receives the SSB (referred to as an SSB #1 below) of the basic cell.

Because a downlink common signal such as the SSB or the like may be normally sent in the basic cell, the UE may perform operations such as downlink timing, frequency offset estimation, cell measurement, and the like based on the SSB from the basic cell. Any processing manner may be used to implement the downlink timing, the frequency offset estimation, or cell measurement. This is not limited in this application.

Based on the received SSB #1, the UE may use different random access manners.

For example, in an implementation, S603 includes: The UE sends, to a second base station, a PRACH corresponding to the first dormant cell, where the PRACH and the SSB #1 satisfy the association relationship #1.

It should be noted that sending the PRACH in this application may also be sending a preamble in the PRACH.

Optionally, assuming that T dormant cells in the N dormant cells belong to the second base station (where T≤N), the first base station separately receives corresponding PRACHs in the T dormant cells, and PRACHs of the T dormant cells each have the association relationship #1 with the SSB #1.

For another example, in an implementation, S603 includes the following S603-1 to S603-3:
S603-1: The UE sends the wake-up signal to the second base station through the first dormant cell.

The second base station is a base station that manages the first dormant cell. The second base station and the first base station that manages the basic cell may be a same base station, or may be different base stations.

The wake-up signal indicates the second base station to send the downlink common signal to the UE in the first dormant cell, for example, send an SSB (which is referred to as an SSB #2 below). The wake-up signal and the SSB #2 satisfy the association relationship #2, so that the UE may perform random access based on the SSB of the first dormant cell. For detailed descriptions of the wake-up signal and the downlink common signal, refer to the foregoing related content of the first indication information or the WUS.

S603-2: The UE receives the SSB #2 from the first dormant cell.

S603-3: The UE sends, to the base station, the PRACH corresponding to the SSB #2.

The UE may determine to initiate the random access to the first dormant cell through one PRACH corresponding to the SSB #2. The association relationship between the SSB #2 and the PRACH is similar to the association relationship #1. The association relationship between the SSB #2 and the PRACH may include the configuration information, of the dormant cell, that is obtained by the UE in S501. Details are not described.

Optionally, assuming that the T dormant cells in the N dormant cells belong to the second base station (T≤N), the second base station separately receives corresponding wake-up signals in the T dormant cells, and the wake-up signals of the T dormant cells each have the association relationship #2 with the SSB #1.

According to the two implementations above, in the multi-carrier deployment scenario, the base station does not need to send any signal in the dormant cell, and energy saving effect of the dormant cell may be maximized. In addition, with assistance of the basic component carrier, the UE may obtain the configuration information of the dormant cell, to directly access the dormant cell or wake up the dormant cell by using the wake-up signal, avoid first accessing the basic cell and then being handed over to the dormant cell, and reduce the delay of accessing the dormant cell.

Optionally, in an implementation of this application, the UE receives the reference signal from the dormant cell, and triggers sending of the downlink common signal of the first dormant cell by using the wake-up signal. The reference signal is used to assist the UE in selecting the dormant cell to be accessed and a PRACH resource, so that a success rate of the cell access can be improved, and an access delay can be reduced.

In the implementation, the method further includes: The UE receives P reference signals from L dormant cells, where the P reference signals have an association relationship with Q PRACHs, L, P, and Q each are a positive integer, L≤P, L≤N, and the first dormant cell belongs to the L dormant cells.

Specifically, the L dormant cells each may be managed by the one or more base stations including the second base station, and the UE may receive the P reference signals from the one or more base stations including the second base station. That is, the UE may separately receive the reference signals from different base stations that manage the dormant cell. For specific descriptions of the reference signal, refer to the foregoing related content, for example, the reference signal or the DRS in the embodiment shown in FIG. 2.

Optionally, if the configuration information of the dormant cell includes the association relationship between the SSB of the basic cell and the reference signal of the dormant cell, namely, the foregoing association relationship #5, the UE may determine, based on the received SSB of the basic cell and the association relationship #5, specific reference signals corresponding to the dormant cell, and only receive the reference signals corresponding to the dormant cell.

Optionally, the configuration information of the N dormant cells includes configuration information of reference signals of the N dormant cells, and an association relationship between the reference signals of the N dormant cells and the PRACH, namely, the association relationship #3. Specifically, the base station may broadcast the configuration information of the reference signals of the N dormant cells, for example, including time-frequency position information of the reference signal, so that the UE detects the reference signal of the dormant cell at a corresponding time-frequency position. In addition, the base station may further broadcast the association relationship #4 in the basic cell, so that the UE determines a wake-up signal to be sent to the dormant cell to be accessed.

In the implementation, S602 includes: The UE determines the first reference signal from the P reference signals, and correspondingly determines a first dormant cell in which the first reference signal is located.

Specifically, the UE may detect, based on the configuration information of the reference signals of the dormant cells that is received from the basic cell, the reference signals from the L dormant cells, determine the first reference signal from the detected reference signals based on a condition such as signal received quality or the like, and determine the cell in which the first reference signal is located as the dormant cell to be accessed, namely, the first dormant cell. For detailed descriptions of how to determine the first dormant cell, refer to step S201-1 in the embodiment shown in FIG. 2. Details are not described.

In the implementation, S603 includes: The UE sends, to the second base station, the PRACH corresponding to the first dormant cell, where the PRACH and the first reference signal from the first dormant cell satisfy the association relationship #3.

As described above, the association relationship #3 may include the association relationship between the reference signals of the N dormant cells and the PRACH. The first dormant cell belongs to the N dormant cells. Therefore, the UE can obtain, by obtaining the association relationship #3, the PRACH corresponding to the first dormant cell.

A resource position of the PRACH corresponding to the first dormant cell is determined based on a resource position of the first reference signal, and a spatial domain parameter for sending the PRACH is the same as the spatial domain parameter for receiving the first reference signal. For specific descriptions of the spatial domain parameter, refer to the foregoing related content. Details are not described.

Optionally, in another implementation, the UE may send a wake-up signal corresponding to the first reference signal to the second base station, to indicate the second base station to wake up the first dormant cell. In the implementation, S603 includes: The UE sends the wake-up signal to the second base station through the first dormant cell, receives the SSB #2 from the first dormant cell, and sends the PRACH corresponding to the SSB #2 to the base station, where the wake-up signal and the first reference signal satisfy the foregoing association relationship #4.

Optionally, the time domain position of the wake-up signal may be determined based on the predefined time domain offset or the time domain offset carried in the first reference signal with reference to the time domain position of the first reference signal. For details, refer to related content in the embodiments shown in FIG. 2 to FIG. 5.

Optionally, in another implementation, if the reference signal is the PSS, an association relationship between the reference signal and the PRACH may reuse the association relationship that is between the SSB and the PRACH and that is indicated in the SIB 1 information of the dormant cell. The base station does not need to indicate the association relationship #3 to the UE. Details are not described.

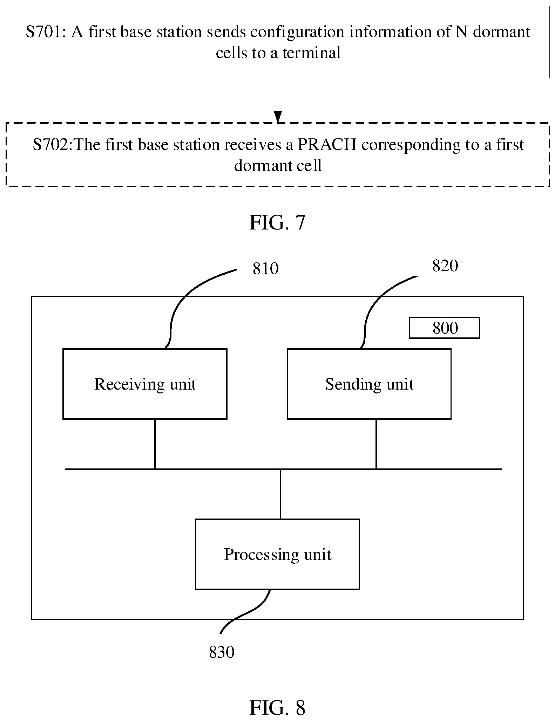

The embodiment shown in FIG. 7 describes a method for accessing a dormant cell by UE in a multi-carrier deployment scenario from a perspective of a base station. The embodiment shown in FIG. 7 and the embodiment shown in FIG. 6 are mutually referenced, and content described in the foregoing embodiment is not described.

S701: A first base station sends configuration information of N dormant cells to a terminal, where N is a positive integer.

The configuration information of the N dormant cells is used by the terminal to determine to initiate random access to a first dormant cell. The dormant cell does not send a downlink common signal when the dormant cell is in a cell idle state, and the first dormant cell belongs to the N dormant cells.

Optionally, in an implementation, the first dormant cell is managed by the first base station. The method further includes S702: The first base station receives a PRACH corresponding to the first dormant cell.

Optionally, the method further includes: The first base station sends an SSB #1 to the UE through a basic cell. Based on the received SSB #1, the UE may use different random access manners, and then the first base station may perform a corresponding operation.

For example, S702 includes: The first base station receives, from the UE, the PRACH corresponding to the first dormant cell, and the PRACH and the SSB #1 satisfy the association relationship #1.

For another example, the method further includes: The first base station receives the wake-up signal sent by the UE through the first dormant cell, and the first base station sends an SSB#2 to the UE through the first dormant cell. Correspondingly, S702 includes: The first base station receives, from the UE, a PRACH corresponding to the SSB #2. For specific descriptions of the implementation, refer to the foregoing S603-1 to S603-3. Details are not described.

Optionally, in an implementation, the first base station manages a total of S dormant cells including the first dormant cell. The method further includes: The first base station sends Pi reference signals to the UE through Li dormant cells, where the Pi reference signals have an association relationship with Qi PRACHs (that is, satisfy an association relationship #3), Li, P₁, and Qi each are a positive integer, L₁≤P₁, and L₁≤S≤N. The first dormant cell belongs to the Li dormant cells.

It may be understood that, in addition to the first base station, another base station may also send the reference signals to the UE through a part of or all of dormant cells managed by the another base station.

In the implementation, optionally, S702 includes: receiving the PRACH sent by the UE through the first dormant cell, where the PRACH and a first reference signal from the first dormant cell satisfy an association relationship #3.

Optionally, the first base station receives a corresponding PRACH in each of the Li dormant cells. PRACHs of the Li dormant cells have the association relationship #3 with reference signals from the Li dormant cells respectively.

In the implementation, optionally, the method further includes: The first base station receives the wake-up signal sent by the UE in the first dormant cell, and the first base station sends the SSB #2 of the first dormant cell to the UE, and S702 includes: The second base station receives, from the UE, the PRACH corresponding to the SSB #2. The wake-up signal and the reference signal that is received by the UE from the first dormant cell satisfy the association relationship #4.

If the first base station receives the wake-up signal in the first dormant cell, the first base station wakes up the first dormant cell, and normally sends the downlink common signal such as the SSB through the first dormant cell. Details are not described.

For specific descriptions of the foregoing association relationships, refer to related content in the embodiment shown in FIG. 6. Details are not described.

It may be understood that S701 and S702 are decoupled. If the first dormant cell is managed by a second base station other than the first base station, step S702 may be performed by the second base station. Details are not described.

According to the cell access method provided in FIG. 6 and FIG. 7, in the multi-carrier deployment scenario, the base station indicates the SSB of the basic cell, or indicates the association relationship between the reference signal of the dormant cell and the wake-up signal of the dormant cell, or indicates the association relationship between the reference signal of the dormant cell and the PRACH of the dormant cell through the basic cell, to assist the UE in selecting an appropriate resource to send the wake-up signal or selecting an appropriate PRACH to access the dormant cell, so that an access delay of accessing the dormant cell by the UE is reduced while energy consumption of the network device is reduced.

Embodiments of this application further provide a communication apparatus configured to implement any one of the foregoing methods. For example, a communication apparatus is provided, and includes units (or means) configured to implement steps performed by the terminal or the network device in any one of the foregoing methods. For example, FIG. 8 is a schematic diagram of a communication apparatus according to an embodiment of this application. The communication apparatus may be a module, for example, a chip, used for a terminal or a network device. Alternatively, the communication apparatus is the terminal or the network device. As shown in FIG. 8, the communication apparatus 800 includes a receiving unit 810 and a sending unit 820.

When the communication apparatus is configured to perform a function of the UE in the method embodiment shown in FIG. 2, the receiving unit 810 is configured to receive M reference signals, where the M reference signals are from C cells, M and C are positive integers, and M is greater than or equal to C. The sending unit 820 is configured to send first indication information to the network device based on a first reference signal, where the first indication information indicates the network device to send a downlink common signal in a target cell, the downlink common signal is used by the terminal to access the target cell, the downlink common signal includes system information, and the first reference signal belongs to the M reference signals and is from the target cell.

Optionally, the communication apparatus 800 further includes a processing unit 830.

The processing unit 830 may be configured to determine the first reference signal from the M reference signals, for example, determine the first reference signal based on signal received quality of the M reference signals.

Optionally, the first reference signal carries a local cell identity, a value of the local cell identity is an integer greater than or equal to 0 and less than or equal to N-1, and N is less than a maximum value of a physical cell identity.

Optionally, reference signals of different cells have different frequency domain positions. Therefore, a cell in which the reference signal is located may be implicitly indicated by using the frequency domain position.

Optionally, the sending unit 820 is configured to send indication information by using a predefined transmit power.

Optionally, the first indication information carries a cell identity of the target cell. Optionally, the first indication information is a sequence corresponding to the cell identity of the target cell.

Optionally, the first reference signal further carries a time domain offset, the time domain offset indicates an offset between a time domain position of the first reference signal and a time domain position of the first indication information, the first reference signal is located in a downlink part of a time division duplex frame structure, and the first indication information is located in an uplink part of the time division duplex frame structure. In the implementation, the processing unit 830 is configured to determine the time domain position of the first indication information based on the time domain position of the first reference signal and the time domain offset carried in the first reference signal. The sending unit 820 is configured to send the first indication information at the determined time domain position of the first indication information.

Optionally, there is a predefined time domain offset between the time domain position of the first reference signal and the time domain position of the first indication information, the reference signal is located in the downlink part of the time division duplex frame structure, and the first indication information is located in the uplink part of the time division duplex frame structure. In the implementation, the processing unit 830 is configured to determine the time domain position of the first indication information based on the time domain position of the first reference signal and the predefined offset. The sending unit 820 is configured to send the first indication information at the determined time domain position of the first indication information.

For more detailed descriptions of functions performed by the units in the communication apparatus on a terminal side in the foregoing implementations, refer to descriptions of steps performed by the UE in the method embodiment shown in FIG. 2 to FIG. 4. Details are not described herein again.

When the communication apparatus is configured to perform a function of the UE in the method embodiment shown in FIG. 6, the receiving unit 810 is configured to receive configuration information of N dormant cells from a basic cell, where N is a positive integer. The processing unit 830 is configured to determine a first dormant cell from the N dormant cells. The sending unit 820 is configured to initiate random access to the first dormant cell, where the dormant cell does not send a downlink common signal when the dormant cell is in a cell idle state. The basic cell is managed by a first network device.

Optionally, the receiving unit 810 is further configured to receive a first synchronization signal block from the basic cell. The sending unit 820 is configured to send, to a second network device, a first random access channel corresponding to the first dormant cell, where the first random access channel has a first association relationship with the first synchronization signal block, and the second network device manages the first dormant cell.

Optionally, the receiving unit 810 is further configured to receive a first synchronization signal block from the basic cell. The sending unit 820 is configured to send first indication information to a second network device through the first dormant cell, where the first indication information indicates the network device to send a second synchronization signal block to the terminal in the first dormant cell, and the first indication information has a second association relationship with the first synchronization signal block. The receiving unit 810 is further configured to receive the second synchronization signal block. The sending unit 820 is further configured to send, to the second network device, a second random access channel corresponding to the second synchronization signal block.

Optionally, the receiving unit 810 is further configured to receive P reference signals from L dormant cells, where the P reference signals are reference signals that have an association relationship with Q physical random access channels, L, P, and Q each are a positive integer, L≤P, and L≤N. In an implementation, the sending unit 820 is configured to send, to the second network device, a third random access channel corresponding to the first dormant cell, where the third random access channel has a third association relationship with a first reference signal from the first dormant cell. In an implementation, the sending unit 820 is configured to send second indication information to the second network device through the first dormant cell based on a first reference signal, where the second indication information indicates the second network device to send a third synchronization signal block to the terminal in the first dormant cell. The receiving unit 810 is configured to receive the third synchronization signal block. The sending unit 820 is further configured to send, to the second network device, a fourth random access channel corresponding to the third synchronization signal block, where the second indication information has a fourth association relationship with the first reference signal, and the first reference signal belongs to the P reference signals and is from the first dormant cell.

The first network device and the second network device may be a same network device or different network devices.

For more detailed descriptions of functions performed by the units in the communication apparatus on the terminal side in the foregoing implementations, refer to descriptions of steps performed by the UE in the method embodiment shown in FIG. 6. Details are not described herein again.

When the communication apparatus is configured to perform a function of the first base station in the method embodiment described in FIG. 5, the sending unit 820 is configured to send R reference signals to a terminal through C₁ cells, where R and C₁ are positive integers, and R is greater than or equal to C₁. The receiving unit 810 is configured to receive first indication information from the terminal, where the first indication information corresponds to a first reference signal, the first reference signal is one of the R reference signals and is from a target cell, the first indication information indicates a network device to send a downlink common signal in the target cell, the downlink common signal is used by the terminal to access the target cell, and the downlink common signal includes system information. The sending unit 820 is further configured to send the downlink common signal to the terminal in the target cell.

Optionally, the receiving unit 810 is configured to receive R1 pieces of indication information at time domain positions of the R1 pieces of indication information, where distances between the time domain positions of the R1 pieces of indication information and time domain positions of R1 reference signals are respectively equal to time domain offsets carried in the R1 reference signals, and the first indication information belongs to the R1 pieces of indication information.

Optionally, the receiving unit 810 is configured to receive R2 pieces of indication information at time domain positions of the R2 pieces of indication information, where distances between the time domain positions of the R2 pieces of indication information and time domain positions of R2 reference signals each are equal to a predefined time domain offset, and the first indication information belongs to the R2 pieces of indication information.

For more detailed descriptions of functions performed by the units of the communication apparatus on a network device side in the foregoing implementations, refer to descriptions of steps performed by the first base station in the method embodiment shown in FIG. 5. Details are not described herein again.

When the communication apparatus is configured to perform a function of the first base station in the method embodiment shown in FIG. 7, the sending unit 820 is configured to send configuration information of N dormant cells to a terminal through a basic cell, where N is a positive integer, the configuration information of the N dormant cells is used by the terminal to determine to initiate random access to a first dormant cell, the dormant cell does not send a downlink common signal when the dormant cell is in a cell idle state, and the first dormant cell belongs to the N dormant cells.

In an implementation, a first network device manages the basic cell and S dormant cells, where S≤N.

Optionally, the first dormant cell belongs to the S dormant cells. The sending unit 820 is further configured to send a first synchronization signal block to the terminal through the basic cell. The receiving unit 810 is further configured to receive, from the terminal, a first random access channel corresponding to the first dormant cell, where the first random access channel has a first association relationship with the first synchronization signal block.

Optionally, the receiving unit 810 is further configured to receive corresponding random access channels in S₁ dormant cells, where the random access channels of the S₁ dormant cells each have a first association relationship with the first synchronization signal block, S₁≤S, and the first dormant cell belongs to the S₁ dormant cells.

Optionally, the first dormant cell belongs to the S dormant cells. The sending unit 820 is further configured to send a first synchronization signal block to the terminal through the basic cell. The receiving unit 810 is further configured to receive first indication information sent by the terminal in the first dormant cell, where the first indication information indicates the first network device to send a second synchronization signal block to the terminal in the first dormant cell, and the first indication information has a second association relationship with the first synchronization signal block. The sending unit 820 is further configured to send the second synchronization signal block. The receiving unit 810 is further configured to receive, from the terminal, a second random access channel corresponding to the second synchronization signal block.

Optionally, the receiving unit 810 is configured to receive corresponding indication information in S₂ dormant cells, where the indication information of the S₂ dormant cells has a second association relationship with the first synchronization signal block, S₂≤S, and the first dormant cell belongs to the S₂ dormant cells.

Optionally, the first dormant cell belongs to the S dormant cells. The sending unit 820 is further configured to send Pi reference signals to the terminal through Li dormant cells, where the Pi reference signals have an association relationship with Q₁ physical random access channels, Li, Pi, and Qi each are a positive integer, L₁≤P₁, and L₁≤S≤N. In an implementation, the receiving unit 810 is further configured to receive, from the terminal, a third random access channel corresponding to the first dormant cell, where the third random access channel has a third association relationship with a first reference signal from the first dormant cell, and the first dormant cell belongs to the Li dormant cells. In another implementation, the receiving unit 810 is further configured to receive second indication information from the terminal, where the second indication information indicates a second network device to send a third synchronization signal block to the terminal in the first dormant cell. The sending unit 820 is further configured to send the third synchronization signal block. The receiving unit 810 is further configured to receive a fourth random access channel corresponding to the third synchronization signal block, where the second indication information has a fourth association relationship with a first reference signal, and the first reference signal belongs to Pi reference signals and is from the first dormant cell.

Optionally, the receiving unit 810 is further configured to receive corresponding random access channels in the L₁ dormant cells, where the random access channels of the Li dormant cells each have a third association relationship with reference signals from the Li cells.

For more detailed descriptions of functions performed by the units of the communication apparatus on the network device side in the foregoing implementations, refer to descriptions of steps performed by the first base station in the method embodiment shown in FIG. 7.

It should be understood that division into units in the foregoing apparatus is merely logical function division. During actual implementation, all of or a part of the units may be integrated into one physical entity, or may be physically separated. For example, the receiving unit 810 and the sending unit 820 may be combined into one communication unit for the communication apparatus 800 to communicate with another terminal/network device.

In addition, all the units in the apparatus may be implemented in a form in which a processing element invokes software, or may be implemented in a form of hardware; or some units may be implemented in a form in which a processing element invokes software, and some units are implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processing element, or may be implemented in a form of software invoked by a processing element.

In an example, a unit in any one of the foregoing apparatuses may be one or more integrated circuits configured to implement the foregoing methods, for example, one or more application-specific integrated circuits (Application-Specific Integrated Circuits, ASICs), one or more microprocessors (e.p. digital signal processors, DSPs), one or more field programmable gate arrays (Field Programmable Gate Arrays, FPGAs), or a combination of at least two of these integrated circuit forms. For another example, when the unit in the apparatus may be implemented in a form of scheduling a program by the processing element, the processing element may be a general-purpose processor, for example, a central processing unit (Central Processing Unit, CPU) or another processor that can invoke the program. For still another example, the units may be integrated and implemented in a form of a system-on-a-chip (system-on-a-chip, SOC).

The foregoing unit (for example, a communication unit) for receiving is an interface circuit of the apparatus, and is configured to receive a signal from another apparatus. For example, when the apparatus is implemented in a manner of a chip, the receiving unit is an interface circuit that is of the chip and that is configured to receive the signal from another chip or apparatus. The foregoing unit (for example, a sending unit or the communication unit) for sending is an interface circuit of the apparatus, and is configured to send the signal to another apparatus. For example, when the apparatus is implemented in the manner of the chip, the sending unit is an interface circuit that is of the chip and that is configured to send the signal to the another chip or apparatus.

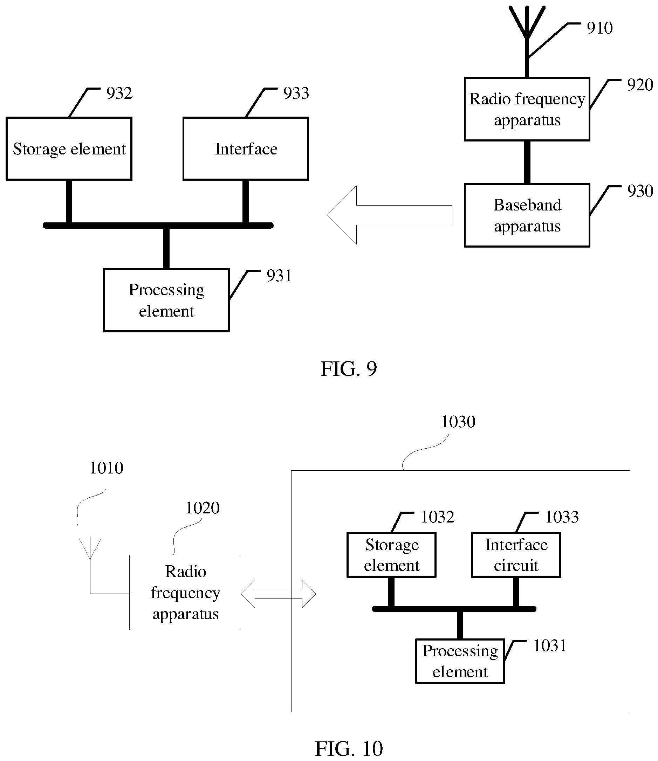

FIG. 9 is a schematic diagram of a structure of a network device according to an embodiment of this application. The network device may be a base station, configured to perform the cell access method provided in the foregoing method embodiments. As shown in FIG. 9, the network device includes an antenna 910, a radio frequency apparatus 920, and a baseband apparatus 930. The antenna 910 is connected to the radio frequency apparatus 920. In an uplink direction, the radio frequency apparatus 920 receives information sent by a terminal through the antenna 910, and sends the information sent by the terminal to the baseband apparatus 930 for processing. In a downlink direction, the baseband apparatus 930 processes information of the terminal, and sends the processed information to the radio frequency apparatus 920. The radio frequency apparatus 920 processes the information of the terminal, and then sends the processed information to the terminal through the antenna 910.

The baseband apparatus 930 may include one or more processing elements 931, for example, include a main control CPU and another integrated circuit. In addition, the baseband apparatus 930 may further include a storage element 932 and an interface 933. The storage element 932 is configured to store a program and data. The interface 933 is configured to exchange information with the radio frequency apparatus 920. The interface is, for example, a common public radio interface (common public radio interface, CPRI). The foregoing apparatus used for the network device may be located in the baseband apparatus 930. For example, the foregoing apparatus used for the network device may be a chip on the baseband apparatus 930. The chip includes at least one processing element and an interface circuit. The processing element is configured to perform steps of any cell access method provided in the foregoing method embodiments. The interface circuit is configured to communicate with another apparatus. In an implementation, units of the network device for implementing the steps in the foregoing methods may be implemented in a form of scheduling a program by the processing element. For example, the apparatus used for the network device includes the processing element and a storage element. The processing element invokes a program stored in the storage element, to perform the cell access method provided in any one of the foregoing method embodiments. The storage element may be a storage element located on a same chip as the processing element, namely, an on-chip storage element, or may be a storage element that is located on a chip different from that of the processing element, namely, an off-chip storage element.

FIG. 10 is a schematic diagram of a structure of a terminal according to an embodiment of this application. The terminal is configured to implement the cell access method provided in the foregoing method embodiments. As shown in FIG. 10, the terminal includes an antenna 1010, a radio frequency part 1020, and a signal processing part 1030. The antenna 1010 is connected to the radio frequency part 1020. In a downlink direction, the radio frequency part 1020 receives information sent by a network device through the antenna 1010, and sends the information sent by the network device to the signal processing part 1030 for processing. In an uplink direction, the signal processing part 1030 processes information of the terminal, and sends the processed information to the radio frequency part 1020. The radio frequency part 1020 processes the information of the terminal, and then sends the processed information to the network device through the antenna 1010.

The signal processing part 1030 is configured to implement processing on communication protocol layers of data. The signal processing part 1030 may be a subsystem of the terminal. The terminal may further include another subsystem, for example, a central processing subsystem, configured to process an operating system and an application layer of the terminal. For another example, a peripheral subsystem is configured to connect to another device. The signal processing part 1030 may be a separately disposed chip. Optionally, the foregoing apparatus may be located in the signal processing part 1030.

The signal processing part 1030 may include one or more processing elements 1031, for example, include a main control CPU and another integrated circuit. In addition, the signal processing part 1030 may further include a storage element 1032 and an interface circuit 1033. The storage element 1032 is configured to store data and a program. A program used to perform the method performed by the terminal in the foregoing methods may or may not be stored in the storage element 1032, for example, stored in a memory outside the signal processing part 1030. When the program is used, the signal processing part 1030 loads the program into a cache for use. The interface circuit 1033 is configured to communicate with the apparatus. The foregoing apparatus may be located in the signal processing part 1030. The signal processing part 1030 may be implemented through a chip. The chip includes at least one processing element and an interface circuit. The processing element is configured to perform steps of any cell access method provided in the foregoing method embodiments. The interface circuit is configured to communicate with another apparatus. In an implementation, units of the terminal for implementing the steps in the foregoing methods may be implemented in a form of scheduling a program by the processing element. For example, the apparatus includes the processing element and a storage element. The processing element invokes a program stored in the storage element, to perform any cell access method provided in the foregoing method embodiments. The storage element may be a storage element located on a same chip as the processing element, namely, an on-chip storage element.

In another implementation, the storage element may alternatively be a storage element located on a different chip from the processing element, namely, an off-chip storage element. In this case, the processing element invokes or loads the program on the on-chip storage element from the off-chip storage element, to invoke and perform any cell access method in the foregoing method embodiments.

In still another implementation, units of the terminal or the network device for implementing the steps in the foregoing methods may be configured as one or more processing elements. The processing elements herein may be integrated circuits, for example, one or more ASICs, one or more DSPs, one or more FPGAs, or a combination of these types of integrated circuits. These integrated circuits may be integrated together to form the chip.

The units for implementing the steps in the foregoing methods may be integrated together and implemented in a form of a system-on-a-chip (system-on-a-chip, SOC). The SOC chip is configured to implement the foregoing methods. The at least one processing element and the storage element may be integrated into the chip. The method performed by the terminal or the network device may be implemented in the form of scheduling the program by the processing element. Alternatively, at least one integrated circuit may be integrated into the chip, to implement the method performed by the terminal or the network device. Alternatively, with reference to the foregoing implementations, functions of some units may be implemented in the form of scheduling the program by the processing element, and functions of some units are implemented in a form of the integrated circuit.

In still another implementation, the communication apparatus provided in embodiments of this application may include the at least one processing element and the interface circuit. The at least one processing element is configured to perform any cell access method provided in the foregoing method embodiments. The processing element may perform a part of or all of the steps performed by the terminal or the network device in a first manner, to be specific, by invoking the program stored in the storage element; or may perform a part of or all of the steps performed by the terminal or the network device in a second manner, to be specific, by using a hardware integrated logic circuit in the processing element in combination with instructions; or may certainly perform a part of or all of the steps performed by the terminal or the network device by combining the first manner and the second manner. It may be understood that the interface circuit may be a transceiver or an input/output interface. Optionally, the communication apparatus may further include a memory, configured to store instructions executed by the processing element, or store input data required by the processing element to run the instructions, or store data generated after the processing element runs the instructions.

As described above, the processing element herein may be a general-purpose processor, for example, a CPU, or may be one or more integrated circuits configured to implement the foregoing methods, for example, one or more ASICs, one or more microprocessors DSPs, one or more FPGAs, or a combination of at least two of these integrated circuits. The storage element may be one memory, or may be a general term of a plurality of storage elements.

A person of ordinary skill in the art may understand that all of or a part of the steps in the method embodiments may be implemented by hardware related to program instructions. The foregoing program may be stored in a computer-readable storage medium. When the program is run, the steps in the method embodiments are performed. The foregoing storage medium includes any medium that may store program code, such as a ROM, a RAM, a magnetic disk, an optical disc, or the like.

The resource in embodiments of this application may also be referred to as a transmission resource, including one or more of a time domain resource, a frequency domain resource, and a code channel resource. The resource may be used to carry data or signaling in an uplink communication process or a downlink communication process.

It should be understood that the term "and/or" in this specification only describes an association relationship for describing associated objects and indicates that three relationships may exist. For example, A and/or B may indicate the following three cases: Only A exists, both A and B exist, and only B exists.

It should be understood that, in embodiments of the present invention, "B corresponding to A" indicates that B is associated with A, and B may be determined based on A. However, it should be further understood that determining B based on A does not mean that B is only determined based on A, and B may alternatively be determined based on A and/or other information.

In embodiments of this application, "a plurality of" means two or more.

Descriptions such as "first" and "second" in embodiments of this application are only used as examples and used to distinguish between objects, but do not indicate a sequence or indicate a specific limitation on a quantity of objects in embodiments of this application, and cannot constitute any limitation on embodiments of this application.

In embodiments of this application, unless otherwise specified, "transmit/transmission" (transmit/transmission) refers to bidirectional transmission, and includes a sending action and/or a receiving action. Specifically, "transmit/transmission" in embodiments of this application includes data sending, data receiving, or data sending and data receiving. In other words, data transmission herein includes uplink data transmission and/or downlink data transmission. Data may include information and/or a signal. The uplink data transmission is uplink information transmission and/or uplink signal transmission. The downlink data transmission is downlink information transmission and/or downlink signal transmission.

Content in embodiments of this application may be mutually referenced. Unless otherwise stated or there is a logic conflict, terms and/or descriptions between different embodiments are consistent and may be mutually referenced, and technical features in different embodiments may be combined based on an internal logical relationship thereof, to form a new embodiment.

It may be understood that, in embodiments of this application, the terminal and/or the network device may perform a part of or all of steps in embodiments of this application. The steps or operations are merely examples. In embodiments of this application, another operation or variations of various operations may alternatively be performed. In addition, the steps may be performed in different sequences presented in embodiments of this application, and not all operations in embodiments of this application may be performed.

## Claims

**1.** A cell access method, wherein the method is applied to a terminal, and the method comprises:
receiving M reference signals, wherein the M reference signals are from C cells, M and C are positive integers, and M is greater than or equal to C; and
sending first indication information to a network device based on a first reference signal, wherein the first indication information indicates the network device to send a downlink common signal in a target cell, the downlink common signal is used by the terminal to access the target cell, the downlink common signal comprises system information, and the first reference signal belongs to the M reference signals and is from the target cell.

**2.** The method according to claim 1, wherein the method further comprises:
determining the first reference signal based on signal received quality of the M reference signals.

**3.** The method according to claim 1 or 2, wherein the first reference signal carries a local cell identity, a value of the local cell identity is an integer greater than or equal to 0 and less than or equal to N-1, N is a positive integer, and N is less than a maximum value of a physical cell identity.

**4.** The method according to claim 3, wherein the value of the local cell identity and a value of the physical cell identity satisfy the following relationship:
V=V_{PCI} mod N, wherein V represents the value of the local cell identity, and V_{PCI} represents the value of the physical cell identity PCI.

**5.** The method according to any one of claims 1 to 4, wherein reference signals of different cells have different frequency domain positions.

**6.** The method according to any one of claims 1 to 5, wherein the first indication information carries a local cell identity of the target cell.

**7.** The method according to any one of claims 1 to 6, wherein the first reference signal further carries a time domain offset, and the time domain offset indicates an offset between a time domain position of the first reference signal and a time domain position of the first indication information.

**8.** The method according to claim 7, wherein the sending first indication information to a network device comprises:
determining the time domain position of the first indication information based on the time domain position of the first reference signal and the offset carried in the first reference signal, and sending the first indication information at the determined time domain position.

**9.** The method according to any one of claims 1 to 6, wherein
there is a predefined time domain offset between a time domain position of the first reference signal and a time domain position of the first indication information.

**10.** The method according to claim 9, wherein the sending first indication information to a network device comprises:
determining the time domain position of the first indication information based on the time domain position of the first reference signal and the predefined offset, and sending the first indication information at the determined time domain position.

**11.** The method according to any one of claims 1 to 10, wherein a spatial domain parameter used to receive the first reference signal is the same as a spatial domain parameter used to send the first indication information.

**12.** The method according to any one of claims 1 to 11, wherein the first reference signal occupies two symbols, and the two symbols are spaced by at least one symbol.

**13.** The method according to any one of claims 1 to 12, wherein the first reference signal comprises paging indication information, the paging indication information indicates whether data of one or more terminals belonging to P terminal groups arrives at the network device, the terminal belongs to one of the P terminal groups, and P is a positive integer.

**14.** The method according to any one of claims 1 to 13, wherein the system information comprises one or more of the following:
master information block;
scheduling information of a system information block 1;
number information of a time unit in which the downlink common signal is located; and
random access channel configuration information.

**15.** The method according to any one of claims 1 to 14, wherein the reference signal is a discovery reference signal DRS, and the first indication information is a wake-up signal WUS.

**16.** The method according to any one of claims 1 to 15, wherein the sending first indication information to a network device comprises: sending the first indication information by using a predefined transmit power.

**17.** The method according to any one of claims 1 to 16, wherein
the M reference signals are a part of or all of the M reference signals that are successfully received by the terminal after the terminal attempts to perform blind detection on the M reference signals; or
the M reference signals are M reference signals that are successfully received by the terminal after the terminal attempts to perform blind detection on N reference signals, and N≥M.

**18.** A cell access method, wherein the method is applied to a network device, and the method comprises:
sending R reference signals to a terminal through C₁ cells, wherein R and C₁ are positive integers, and R is greater than or equal to C₁;
receiving first indication information from the terminal, wherein the first indication information corresponds to a first reference signal, the first reference signal is one of the R reference signals and is from a target cell, the first indication information indicates the network device to send a downlink common signal in the target cell, the downlink common signal is used by the terminal to access the target cell, and the downlink common signal comprises system information; and
sending the downlink common signal to the terminal in the target cell.

**19.** The method according to claim 18, wherein the reference signal carries a local cell identity, a value of the local cell identity is an integer greater than or equal to 0 and less than or equal to N-1, N is a positive integer, and N is less than a maximum value of a physical cell identity.

**20.** The method according to claim 19, wherein the value of the local cell identity is obtained through calculation according to the following formula:
V=V_{PCI} mod N, wherein V represents the value of the local cell identity, and V_{PCI} represents a value of the physical cell identity PCI.

**21.** The method according to any one of claims 18 to 20, wherein reference signals of different cells have different frequency domain positions.

**22.** The method according to any one of claims 18 to 21, wherein the first indication information carries a local cell identity of the target cell.

**23.** The method according to any one of claims 18 to 22, wherein
the first reference signal further carries a time domain offset, and the time domain offset indicates an offset between a time domain position of the first reference signal and a time domain position of the first indication information.

**24.** The method according to claim 23, wherein the receiving first indication information from the terminal comprises:
receiving Ri pieces of indication information at time domain positions of the R₁ pieces of indication information, wherein distances between the time domain positions of the R₁ pieces of indication information and time domain positions of R₁ reference signals are respectively equal to time domain offsets carried in the R₁ reference signals, the first indication information belongs to the R₁ pieces of indication information, and R₁≤M.

**25.** The method according to any one of claims 18 to 22, wherein
there is a predefined time domain offset between a time domain position of the first reference signal and a time domain position of the first indication information.

**26.** The method according to claim 25, wherein the receiving first indication information from the terminal comprises:
receiving R₂ pieces of indication information at time domain positions of the R₂ pieces of indication information, wherein distances between the time domain positions of the R₂ pieces of indication information and time domain positions of R₂ reference signals each are equal to the predefined time domain offset, the first indication information belongs to the R₂ pieces of indication information, and R₂≤M.

**27.** The method according to any one of claims 18 to 26, wherein a spatial domain parameter used to receive the first indication information is the same as a spatial domain parameter used to send the first reference signal.

**28.** The method according to any one of claims 18 to 27, wherein the first reference signal occupies two symbols, and the two symbols are spaced by at least one symbol.

**29.** The method according to any one of claims 18 to 28, wherein the first reference signal comprises paging indication information, the paging indication information indicates whether data of one or more terminals in P terminal groups arrives at the network device, the terminal belongs to one of the P terminal groups, and P is a positive integer.

**30.** The method according to any one of claims 18 to 29, wherein the system information comprises one or more of the following:
master information block;
scheduling information of a system information block 1;
number information of a time unit in which the downlink common signal is located; and
random access channel configuration information.

**31.** The method according to any one of claims 18 to 30, wherein the reference signal is a discovery reference signal DRS, and the first indication information is a wake-up signal WUS.

**32.** A cell access method, wherein the method is applied to a terminal, and the method comprises:
receiving configuration information of N dormant cells from a basic cell, wherein N is a positive integer;
determining a first dormant cell from the N dormant cells; and
initiating random access to the first dormant cell, wherein the dormant cell does not send a downlink common signal when the dormant cell is in a cell idle state, the basic cell is managed by a first network device, and the first dormant cell is managed by a second network device.

**33.** The method according to claim 32, wherein the method further comprises: receiving a first synchronization signal block from the basic cell; and
the initiating random access to the first dormant cell comprises: sending, to the second network device, a first random access channel corresponding to the first dormant cell, wherein the first random access channel has a first association relationship with the first synchronization signal block, and the second network device manages the first dormant cell.

**34.** The method according to claim 32, wherein the method further comprises: receiving a first synchronization signal block from the basic cell; and
the initiating random access to the first dormant cell comprises: sending first indication information to the second network device through the first dormant cell, wherein the first indication information indicates the second network device to send a second synchronization signal block to the terminal in the first dormant cell, and the first indication information has a second association relationship with the first synchronization signal block; receiving the second synchronization signal block; and sending, to the second network device, a second random access channel corresponding to the second synchronization signal block.

**35.** The method according to claim 32, wherein the method further comprises: receiving P reference signals from L dormant cells, wherein the P reference signals are reference signals that have an association relationship with Q physical random access channels, L, P, and Q each are a positive integer, L≤P, and L≤N; and
the determining a first dormant cell from the N dormant cells comprises: determining the first dormant cell based on signal received quality of the P reference signals, wherein the L dormant cells belong to the N dormant cells, and are managed by one or more network devices.

**36.** The method according to claim 35, wherein
the initiating random access to the first dormant cell comprises: sending, to the second network device, a third random access channel corresponding to the first dormant cell, wherein the third random access channel has a third association relationship with a first reference signal from the first dormant cell.

**37.** The method according to claim 35, wherein
the initiating random access to the first dormant cell comprises: sending second indication information to the second network device through the first dormant cell based on a first reference signal, wherein the second indication information indicates the second network device to send a third synchronization signal block to the terminal in the first dormant cell; receiving the third synchronization signal block; and sending, to the second network device, a fourth random access channel corresponding to the third synchronization signal block, wherein the second indication information has a fourth association relationship with the first reference signal, and the first reference signal belongs to the P reference signals and is from the first dormant cell.

**38.** The method according to claim 36, wherein
a resource position of the third random access channel is determined based on a resource position of the first reference signal, and a spatial domain parameter for sending the third random access channel is the same as a spatial domain parameter for receiving the first reference signal.

**39.** The method according to any one of claims 32 to 38, wherein
the configuration information of the N dormant cells comprises at least one of the following: configuration information of reference signals respectively corresponding to the N dormant cells, configuration information of indication information of the N dormant cells, random access channel configuration information of the N dormant cells, the first association relationship, the second association relationship, the third association relationship, and the fourth association relationship.

**40.** The method according to any one of claims 32 to 39, wherein the reference signal occupies a time domain resource of one symbol, or the reference signal is a primary synchronization signal.

**41.** A cell access method, wherein the method is applied to a network device, and the method comprises:
sending configuration information of N dormant cells to a terminal through a basic cell, wherein N is a positive integer, the configuration information of the N dormant cells is used by the terminal to determine to initiate random access to a first dormant cell, the dormant cell does not send a downlink common signal when the dormant cell is in a cell idle state, and the first dormant cell belongs to the N dormant cells.

**42.** The method according to claim 41, wherein the network device manages the basic cell and S dormant cells, and S≤N.

**43.** The method according to claim 41 or 42, wherein the first dormant cell belongs to the S dormant cells, and
the method further comprises: sending, by a first network device, a first synchronization signal block to the terminal through the basic cell; and receiving, by the first network device from the terminal, a first random access channel corresponding to the first dormant cell, wherein the first random access channel has a first association relationship with the first synchronization signal block.

**44.** The method according to claim 43, wherein the receiving, by the first network device from the terminal, a first random access channel corresponding to the first dormant cell comprises:
respectively receiving random access channels in S₁ dormant cells, wherein the random access channels of the S₁ dormant cells each have a first association relationship with the first synchronization signal block, S₁≤S, and the first dormant cell belongs to the S₁ dormant cells.

**45.** The method according to claim 41 or 42, wherein the first dormant cell belongs to the S dormant cells, and
the method further comprises: sending, by a first network device, a first synchronization signal block to the terminal through the basic cell; receiving first indication information sent by the terminal in the first dormant cell, wherein the first indication information indicates the first network device to send a second synchronization signal block to the terminal in the first dormant cell, and the first indication information has a second association relationship with the first synchronization signal block; sending the second synchronization signal block; and receiving, from the terminal, a second random access channel corresponding to the second synchronization signal block.

**46.** The method according to claim 45, wherein the receiving first indication information sent by the terminal in the first dormant cell comprises:
separately receiving indication information in S₂ dormant cells and successfully receiving the first indication information, wherein the indication information of the S₂ dormant cells has a second association relationship with the first synchronization signal block, S₂≤S, and the first dormant cell belongs to the S₂ dormant cells.
46. The method according to claim 41 or 42, wherein the first dormant cell belongs to the S dormant cells, and
the method further comprises: sending, by a first network device, P₁ reference signals to the terminal through L₁ dormant cells, wherein the P₁ reference signals have an association relationship with Qi physical random access channels, Li, Pi, and Qi each are a positive integer, L₁≤P₁, and L_{1≤}S≤N; and the L₁ dormant cells are a part of or all of the L dormant cells that send P reference signals to UE, and the P₁ reference signals are a part of or all of the P reference signals received by the terminal.

**47.** The method according to claim 46, wherein the method further comprises:
receiving, from the terminal, a third random access channel corresponding to the first dormant cell, wherein the third random access channel has a third association relationship with a first reference signal from the first dormant cell, and the first dormant cell belongs to the L₁ dormant cells.

**48.** The method according to claim 47, wherein the receiving, from the terminal, a third random access channel corresponding to the first dormant cell comprises: receiving corresponding random access channels in the L₁ dormant cells, wherein the random access channels of the L₁ dormant cells each have a third association relationship with reference signals from the L₁ dormant cells.

**49.** The method according to claim 41 or 42, wherein the method further comprises:
receiving second indication information from the terminal, wherein the second indication information indicates a second network device to send a third synchronization signal block to the terminal in the first dormant cell; sending the third synchronization signal block; and receiving a fourth random access channel corresponding to the third synchronization signal block, wherein the second indication information has a fourth association relationship with a first reference signal, and the first reference signal belongs to P₁ reference signals and is from the first dormant cell.

**50.** The method according to any one of claims 41 to 49, wherein a resource position of the third random access channel is determined based on a resource position of the first reference signal, and a spatial domain parameter for sending the third random access channel is the same as a spatial domain parameter for receiving the first reference signal.

**51.** The method according to any one of claims 41 to 50, wherein the configuration information of the N dormant cells comprises at least one of the following: configuration information of reference signals respectively corresponding to the N dormant cells, configuration information of indication information of the N dormant cells, random access channel configuration information of the N dormant cells, the first association relationship, the second association relationship, the third association relationship, and the fourth association relationship.

**52.** The method according to any one of claims 41 to 51, wherein the reference signal occupies a time domain resource of one symbol, or the reference signal is a primary synchronization signal.

**53.** A communication apparatus, comprising units, modules, or means (means) configured to perform the method according to any one of claims 1 to 17 or claims 32 to 40.

**54.** A communication apparatus, comprising units or modules configured to perform the method according to any one of claims 18 to 31 or claims 41 to 52.

**55.** A communication apparatus, comprising a processor, wherein the processor is configured to perform the method according to any one of claims 1 to 17 or claims 32 to 40.

**56.** A communication apparatus, comprising a processor, wherein the processor is configured to perform the method according to any one of claims 18 to 31 or claims 41 to 52.

**57.** A computer-readable storage medium, wherein the computer-readable storage medium stores a computer program; and when the computer program is run by a communication apparatus, the communication apparatus is enabled to perform the method according to any one of claims 1 to 52.

**58.** A computer program product, wherein the computer program product comprises a computer program; and when the computer program is run by a communication apparatus, the communication apparatus is enabled to perform the method according to any one of claims 1 to 52.
